(19) Europäisches Patentamt / European Patent Office / Office européen des brevets

(11) **EP 3 018 156 B1**

(12) **EUROPEAN PATENT SPECIFICATION**

(45) Date of publication and mention
of the grant of the patent:
**22.03.2023 Bulletin 2023/12**

(21) Application number: **14199749.4**

(22) Date of filing: **22.12.2014**

(51) International Patent Classification (IPC):
**C08F 210/06** (2006.01) **C08F 4/654** (2006.01)
**C08F 4/653** (2006.01) **C08F 4/651** (2006.01)
**C08F 4/658** (2006.01) **C08L 23/26** (2006.01)
**C08F 255/04** (2006.01) **C08F 8/50** (2006.01)
**C08L 23/12** (2006.01) **C08K 5/14** (2006.01)

(52) Cooperative Patent Classification (CPC):
(C-Sets available)
**C08F 8/50; C08F 255/04; C08K 5/14; C08L 23/12;**
C08F 2810/10; C08L 2023/42; C08L 2205/025

(Cont.)

(54) **Branched polypropylene for foam applications**

Verzweigtes Polypropylen für Schaumanwendungen

Polypropylène ramifié pour des applications sous forme de mousse

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.11.2014 EP 14191798**
**05.11.2014 EP 14191801**

(43) Date of publication of application:
**11.05.2016 Bulletin 2016/19**

(73) Proprietor: **Borealis AG**
**1020 Vienna (AT)**

(72) Inventors:
• **Klimke, Katja**
**4021 Linz (AT)**
• **Braun, Hermann**
**4040 Linz (AT)**
• **Wang, Jingbo**
**4209 Engerwitzdorf (AT)**
• **Gahleitner, Markus**
**4501 Neuhofen/Krems (AT)**
• **Prokschi, Hermann**
**4231 Wartberg ob der Aist (AT)**
• **Leskinen, Pauli**
**00700 Helsinki (FI)**
• **Lilja, Johanna**
**06100 Porvoo (FI)**

(74) Representative: **Maiwald GmbH**
**Elisenhof**
**Elisenstraße 3**
**80335 München (DE)**

(56) References cited:
**WO-A1-2010/009827 WO-A1-2014/016205**
**JP-A- H1 077 357**

(52) Cooperative Patent Classification (CPC): (Cont.)

C-Sets
**C08F 8/50, C08F 10/06;**
**C08F 10/06, C08F 2/001;**
**C08F 10/06, C08F 4/6465;**
**C08F 10/06, C08F 4/6492;**
**C08F 10/06, C08F 4/651;**
**C08F 10/06, C08F 4/6555;**
**C08F 255/04, C08F 236/06;**
**C08L 23/12, C08L 23/12;**
C08F 110/06, C08F 2500/12, C08F 2500/15,
C08F 2500/11, C08F 2500/24;
C08F 110/06, C08F 2500/12, C08F 2500/15,
C08F 2500/11, C08F 2500/26;
C08F 110/06, C08F 2500/12, C08F 2500/15,
C08F 2500/24;
C08F 210/06, C08F 210/16, C08F 2500/12,
C08F 2500/15, C08F 2500/11, C08F 2500/24;
C08F 210/06, C08F 210/16, C08F 2500/12,
C08F 2500/15, C08F 2500/11, C08F 2500/26;
C08F 210/06, C08F 210/16, C08F 2500/12,
C08F 2500/15, C08F 2500/24

**Description**

The present invention relates to a polypropylene composition comprising a branched polypropylene (b-PP) and having high melt strength (HMS). Furthermore, the present invention also relates to a method for providing the corresponding polypropylene having composition comprising the branched polypropylene (b-PP) and to a foam with the polypropylene composition comprising the branched polypropylene (b-PP).

High melt strength polypropylene (HMS-PP) compositions are generally known in the art. However, one challenge within existing HMS-PP is their generally unsatisfactory melt strength, especially at high extrusion speed and related high die pressure. The relevant parameter(s) for assessing the melt strength of polypropylene compositions are the F30 and F200 melt strength(s) and the v30 and v200 melt drawability. Another parameter for assessing the quality of HMS-PP is the LAOS-NLF (Large Amplitude Oscillatory Shear Non-Linear Factor) value which is usually determined at strain amplitudes of 500 or 1000%.

For HMS-PP suitable for foam applications, it is generally desirable that the melt strength values are as high as possible, especially the F200 melt strength, thus allowing the production of uniform high quality foam with high extrusion speed. Since the melt strength of HMS-PP correlates with the degree of branching, the branching degree can also indirectly be expressed - at a given MFR value - by the F30 and F200 melt strength values.

LAOS-NLF values of HMS-PP shall be high as well, but it is also important that deviations upon multiple measurements of LAOS-NLF shall be small, i.e. that the standard deviation of the LAOS-NLF measurement is small, which is an indication of good product homogeneity.

WO 2014/016205 A1 relates to a polypropylene composition having high melt strength for foam applications. Polypropylene compositions with an F30 melt strength of up to almost 37 cN are disclosed. The polypropylene compositions of WO 2014/016205 A1 comprise branched polypropylene based on propylene homopolymers.

WO 2014/016205 A1 is silent about the achieved F200 melt strengths and the LAOS-NLF values.

EP 2520425 A1 discloses HMS-PP for foam, where the base material for making the branched polypropylene is produced with metallocene catalysts. Although the achieved F30 and F200 melt strengths are up to 36 and 22 cN, respectively, it is not desired to produce the base material for making branched polypropylene with metallocene catalysts due to limited temperature resistance of the produced polypropylenes and foams made therefrom. Also, the low-MFR base materials required for making the branched polypropylene cannot be made with such a high productivity as with Ziegler-Natta catalysts.

JP H1077357 relates to a low-density foam obtained by adding a foaming agent to a modified polypropylene-based resin prepared by kneading a mixture comprising (A) 100 parts by weight of an ethylene-propylene random copolymer having a melt flow rate "30 °C) of 0.1-10 g/10min and a content of ethylene units of 0.1-4 wt.-%; (B) 1-15 parts by weight of a diene-based monomer selected from isoprene and 1,3-butadiene and (C) 0.1-2 parts by weight of a radical polymerization initiator. Accordingly, the object of the present invention is to provide alternative polypropylene compositions suitable for foam which compositions have high melt strength.

There has now surprisingly been found a polypropylene composition comprising a branched polypropylene having high melt strength and thus suitable for foam which is not based on a propylene homopolymer, but on a random copolymer with a small amount of ethylene.

Accordingly, the present invention is therefore directed to a polypropylene composition comprising at least 95 wt.-% of a branched polypropylene (b-PP) wherein the polypropylene composition

- has an ethylene content of 0.2 to 0.5 wt%
- has a melt flow rate $MFR_2$ (230 °C / 2.16 kg) measured according to ISO 1133 of 1.0 to 5.0 g/10 min
- has a F30 melt strength of 30 cN to 60 cN and a v30 melt extensibility of 220 to 300 mm/s,
- has a F200 melt strength of 10 cN to 40 cN and a v200 melt extensibility of 220 to 300 mm/s wherein the F30 and F200 melt strength and the v30 and v200 melt extensibility are measured according to ISO 16790:2005, and wherein

the branched polypropylene (b-PP) is obtainable by reacting a linear polypropylene (l-PP) having an ethylene content of 0.2 to 0.5 wt% and a melt flow rate $MFR_2$ (230°C/2.16 kg) of 0.6 to 3.5 g/10 min with a thermally decomposing free radical-forming agent, preferably with a peroxide, and optionally with a bifunctionally unsaturated monomer, preferably selected from divinyl compounds, allyl compounds or dienes, and/or optionally with a multifunctionally unsaturated low molecular weight polymer, preferably having a number average molecular weight (Mn)≤1000 g/mol, synthesized from one and/or more unsaturated monomers, obtaining thereby the branched polypropylene (b-PP), and the linear polypropylene (l-PP) is obtainable by polymerizing in the presence of a solid Ziegler-Natta catalyst which is prepared by an emulsion-solidification method or by a precipitation method..

The invention further relates to a process for producing a polypropylene composition comprising at least 95 wt.-% of a branched polypropylene (b-PP) wherein the polypropylene composition

- has an ethylene content of 0.2 to 0.5 wt%
- has a melt flow rate MFR$_2$ (230°C / 2.16 kg) measured according to ISO 1133 of 1.0 to 5.0 g/10 min
- has a F30 melt strength of 30 cN to 60 cN and a v30 melt extensibility of 220 to 300 mm/s, wherein the F30 melt strength and the v30 melt extensibility are measured according to ISO 16790:2005 and

wherein the branched polypropylene (b-PP) is provided by reacting a linear polypropylene (l-PP) having an ethylene content of 0.2 to 0.5 wt% and a melt flow rate MFR$_2$ (230 °C / 2.16 kg) of 0.6 to 3.5 g/10 min
with a thermally decomposing free radical-forming agent, preferably with a peroxide, and optionally with a bifunctionally unsaturated monomer, preferably selected from divinyl compounds, allyl compounds or dienes, and/or optionally with a multifunctionally unsaturated low molecular weight polymer, preferably having a number average molecular weight (Mn) ≤ 10000 g/mol, synthesized from one and/or more unsaturated monomers, obtaining thereby the branched polypropylene (b-PP), and wherein the linear polypropylene (l-PP) is polymerised in the presence of a solid Ziegler-Natta catalyst which is prepared by an emulsion-solidification method or by a precipitation method.

Further the invention is related to an extruded foam comprising the polypropylene composition according to the invention.

The branched polypropylene (b-PP)

The major component for the polypropylene composition to be provided according to the invention is a branched polypropylene (b-PP). A branched polypropylene differs from a linear polypropylene in that the polypropylene backbone has side chains whereas a non-branched polypropylene, i.e. a linear polypropylene, does not have side chains. The side chains have a significant impact on the rheology of the polypropylene. Accordingly linear polypropylenes and branched polypropylenes can be clearly distinguished by their flow behavior under stress.

Branching can be achieved by using specific catalysts, i.e. specific single-site catalysts, or by chemical modification. Concerning the preparation of a branched polypropylene obtained by the use of a specific catalyst reference is made to EP 1 892 264. With regard to a branched polypropylene obtained by chemical modification it is referred to EP 0 879 830 A1. In such a case the branched polypropylene is also called high melt strength polypropylene (HMS-PP). The branched polypropylene (b-PP) according to the instant invention is obtained by chemical modification as described in more detail below and thus is a high melt strength polypropylene (HMS-PP). Therefore the terms "branched polypropylene (b-PP)" and "high melt strength polypropylene (HMS-PP)" are regarded in the instant invention as synonyms.

The branched polypropylene (b-PP), i.e. the high melt strength polypropylene (HMS-PP), as the major component of the polypropylene composition has a F30 melt strength of 30.0 to 60.0 cN and a v30 melt extensibility of 210 to 300 mm/s, preferably has a F30 melt strength of 32.0 to 55.0 cN and a v30 melt extensibility of more than 210 to 280 mm/s and a F200 melt strength of 10.0 to 40.0 cN and a v200 melt extensibility of 210 to 300 mm/s, preferably has a F200 melt strength of 15.0 to 35.0 cN and a v200 melt extensibility of more than 210 to 280 mm/s. The F30 and F200 melt strength and the v30 and v200 melt extensibility are measured according to ISO 16790:2005.

Typically the polypropylene composition according to the invention also has a F30 melt strength of 30.0 to 60.0 cN and a v30 melt extensibility of 210 to 300 mm/s, preferably has a F30 melt strength of 32.0 to 55.0 cN and a v30 melt extensibility of more than 210 to 280 mm/s and a F200 melt strength of 10.0 to 40.0 cN and a v200 melt extensibility of 210 to 300 mm/s, preferably has a F200 melt strength of 15.0 to 35.0 cN and a v200 melt extensibility of more than 210 to 280 mm/s.

In a preferred embodiment, the branched polypropylene (b-PP), i.e. the high melt strength polypropylene (HMS-PP), has

(a) a F30 melt strength of 30.0 to 60.0 cN, more preferably of 32.0 to 55.0 cN, still more preferably of 34.0 to 50.0 cN, yet more preferably of 36.0 to 47.0 cN, still yet more preferably of 37.0 to 46.0 cN, most preferably of 38.0 to 45.0 cN;
(b) a v30 melt extensibility of 210 to 300 mm/s, like of 210 to 280 mm/s, more preferably of 215 to 280 mm/s, still more preferably of 220 to 280 mm/s, yet more preferably of 225 to 270 mm/s, most preferably of 225 to 265 mm/s;
(c) a F200 melt strength of 10.0 to 40.0 cN, more preferably of 15.0 to 35.0 cN, still more preferably of 18.0 to 32.0 cN, yet more preferably of 20.0 to 30.0 cN, still yet more preferably of 21.0 to 29.0 cN, most preferably of 22.0 to 28.0 cN; and
(d) a v200 melt extensibility of 210 to 300 mm/s, like of 210 to 280 mm/s, more preferably of 215 to 280 mm/s, still more preferably of 220 to 280 mm/s, yet more preferably of 225 to 270 mm/s, most preferably of 225 to 265 mm/s.

In especially preferred embodiments the branched polypropylene (b-PP), i.e. the high melt strength polypropylene (HMS-PP), has a F30 melt strength of 30.0 to 60.0 cN and a v30 melt extensibility of 210 to 300 mm/s and a F200 melt strength of 10.0 to 40.0 cN and a v200 melt extensibility of 210 to 300 mm/s, like a F30 melt strength of 32.0 to 55.0 cN and a v30 melt extensibility of 210 to 280 mm/s and a F200 melt strength of 15.0 to 35.0 cN and a v200 melt extensibility of 210 to 280 mm/s, more preferably a F30 melt strength of 34.0 to 50.0 cN and a v30 melt extensibility of 215 to 280 mm/s and a F200 melt strength of 18.0 to 32.0 cN and a v200 melt extensibility of 215 to 280 mm/s, still more preferably a F30 melt strength of 36.0 to 47.0 cN and a v30 melt extensibility of 220 to 280 mm/s and a F200 melt strength of 20.0 to 30.0 cN and a v200 melt extensibility of 220 to 280 mm/s, yet more preferably a F30 melt strength of 37.0 to 46.0 cN and a v30 melt extensibility of 225 to 270 mm/s and a F200 melt strength of 21.0 to 29.0 cN and a v200 melt extensibility of 225 to 270 mm/s, most preferably a F30 melt strength of 38.0 to 45.0 cN and a v30 melt extensibility of 225 to 265 mm/s and a F200 melt strength of 22.0 to 28.0 cN and a v200 melt extensibility of 225 to 265 mm/s.

Further it is preferred that the branched polypropylene (b-PP), i.e. the high melt strength polypropylene (HMS-PP), has a melt flow rate $MFR_2$ (230 °C / 2.16 kg) measured according to ISO 1133 of 1.0 to 5.0 g/10 min, like of 1.0 to 4.5 g/10 min, more preferably of 1.2 to 4.5 g/10 min, still more preferably of 1.3 to 4.0 g/10 min, yet more preferably of 1.4 to 3.7 g/10 min, most preferably of 1.5 to 3.5 g/10 min.

Accordingly, in a specific embodiment, the branched polypropylene (b-PP), i.e. the high melt strength polypropylene (HMS-PP), has

(a) a melt flow rate $MFR_2$ (230 °C / 2.16 kg) of 1.0 to 5.0 g/10 min, like of 1.0 to 4.5 g/10 min, more preferably of 1.2 to 4.5 g/10 min, still more preferably of 1.3 to 4.0 g/10 min, yet more preferably of 1.4 to 3.7 g/10 min, most preferably of 1.5 to 3.5 g/10 min;

(b) a F30 melt strength of 30.0 to 60.0 cN, more preferably of 32.0 to 55.0 cN, still more preferably of 34.0 to 50.0 cN, yet more preferably of 36.0 to 47.0 cN, still yet more preferably of 37.0 to 46.0 cN, most preferably of 38.0 to 45.0 cN;

(c) a v30 melt extensibility of 210 to 300 mm/s, like of 210 to 280 mm/s, more preferably of 215 to 280 mm/s, still more preferably of 220 to 280 mm/s, yet more preferably of 225 to 270 mm/s, most preferably of 225 to 265 mm/s;

(d) a F200 melt strength of 10.0 to 40.0 cN, more preferably of 15.0 to 35.0 cN, still more preferably of 18.0 to 32.0 cN, yet more preferably of 20.0 to 30.0 cN, still yet more preferably of 21.0 to 29.0 cN, most preferably of 22.0 to 28.0 cN;

(e) a v200 melt extensibility of 210 to 300 mm/s, like of 210 to 280 mm/s, more preferably of 215 to 280 mm/s, still more preferably of 220 to 280 mm/s, yet more preferably of 225 to 270 mm/s, most preferably of 225 to 265 mm/s.

In a preferred embodiment the branched polypropylene (b-PP), i.e. the high melt strength polypropylene (HMS-PP), has a melt flow rate $MFR_2$ (230 °C / 2.16 kg) of 1.0 to 5.0 g/10 min, a F30 melt strength of 30.0 to 60.0 cN and a v30 melt extensibility of 210 to 300 mm/s and a F200 melt strength of 10.0 to 40.0 cN and a v200 melt extensibility of 210 to 300 mm/s, like a melt flow rate $MFR_2$ (230 °C / 2.16 kg) of 1.0 to 4.5 g/10 min, a F30 melt strength of 32.0 to 55.0 cN and a v30 melt extensibility of 210 to 280 mm/s and a F200 melt strength of 15.0 to 35.0 cN and a v200 melt extensibility of 210 to 280 mm/s, more preferably a melt flow rate $MFR_2$ (230 °C / 2.16 kg) of 1.2 to 4.5 g/10 min, a F30 melt strength of 34.0 to 50.0 cN and a v30 melt extensibility of 215 to 280 mm/s and a F200 melt strength of 18.0 to 32.0 cN and a v200 melt extensibility of 215 to 280 mm/s, still more preferably a melt flow rate $MFR_2$ (230 °C / 2.16 kg) of 1.3 to 4.0 g/10 min, a F30 melt strength of 36.0 to 47.0 cN and a v30 melt extensibility of 220 to 280 mm/s and a F200 melt strength of 20.0 to 30.0 cN and a v200 melt extensibility of 220 to 280 mm/s, yet more preferably a melt flow rate $MFR_2$ of 1.4 to 3.7 g/10 min, a F30 melt strength of 37.0 to 46.0 cN and a v30 melt extensibility of 225 to 270 mm/s and a F200 melt strength of 21.0 to 29.0 cN and a v200 melt extensibility of 225 to 270 mm/s, most preferably a melt flow rate $MFR_2$ (230 °C / 2.16 kg) of 1.5 to 3.5 g/10 min, a F30 melt strength of 38.0 to 45.0 cN and a v30 melt extensibility of 225 to 265 mm/s and a F200 melt strength of 22.0 to 28.0 cN and a v200 melt extensibility of 225 to 265 mm/s.

The branched polypropylene (b-PP), i.e. the high melt strength polypropylene (HMS-PP), has a small ethylene content of 0.2 to 0.5 wt%. This ethylene content is preferably incorporated in the polymer chain as single (isolated) comonomer units, meaning that the branched polypropylene (b-PP), i.e. the high melt strength polypropylene (HMS-PP), is a random copolymer with ethylene.

The polypropylene composition of the present invention is comprised of at least 95 wt% of the branched polypropylene (b-PP). Preferably this means that the relative amount of branched polypropylene (b-PP) based on the total amount of polymeric components of the polypropylene compositions is higher than the absolute percentage of branched polypropylene (b-PP) based on the total polypropylene composition, e.g. higher than 95 wt%, like at least 96 wt%. The reason for this is, that any additives, e.g. processing stabilisers or long term stabilisers, are preferably added in the form of a masterbatch or additive mixture (AM) of e.g. linear polypropylene containing e.g. 1 to 10 wt% each of the different additives. Typically, the additive masterbatch or additive mixture (AM) is added in an amount of from 0.5 to 5 wt% based on the total weight of the polypropylene composition.

The additives (A) can be any additives useful in the technical area of the high melt strength polypropylene (HMS-PP) and its applications. Accordingly the additives (A) to be used in the polypropylene composition of the invention and thus in form of the additive mixture (AM) include, but are not limited to, stabilizers such as antioxidants (e.g. sterically hindered phenols, phosphites/phosphonites, sulphur containing antioxidants, alkyl radikal scavangers, aromatic amines, hindered amine stabilizers, or blends thereof), metal deactivators (e.g. Irganox MD 1024), or UV stabilizers (e.g. hindered amine light stabilizers). Other typical additives are modifiers such as antistatic or antifogging agents (e.g. ethoxylated amines and amides, or glycerol esters), acid scavengers (e.g. Ca-stearate), blowing agents, cling agents (e.g. polyisobutene), lubriciants and resins (ionomer waxes, PE- and ethylene copolymer waxes, Fischer-Tropsch waxes, Montan-based waxes, Fluoro-based compounds, or paraffin waxes), nucleating agents (e.g. talc, benzoates, phosphorous-based compounds, sorbitoles, nonitol-based compounds, or amide-based compounds), as well as slip and antiblocking agents (e.g. erucamide, oleamide, talc natural silica and synthetic silica, or zeolites). Preferably the additives (A) are selected from the group consisting of antioxidants (e.g. sterically hindered phenols, phosphites/phosphonites, sulphur containing antioxidants, alkyl radikyl scavangers, aromatic amines, hindered amine stabilizers, or blends thereof), metal deactivators (e.g. Irganox MD 1024), or UV stabilizers (e.g. hindered amine light stabilizers), antistatic or antifogging agents (e.g. ethoxylated amines and amides, or glycerol esters), acid scavengers (e.g. Ca-stearate), blowing agents, cling agents (e.g. polyisobutene), lubriciants and resins (ionomer waxes, PE- and ethylene copolymer waxes, Fischer-Tropsch waxes, Montan-based waxes, Fluoro-based compounds, or paraffin waxes), nucleating agents (e.g. talc, benzoates, phosphorous-based compounds, sorbitoles, nonitol-based compounds, or amide-based compounds), slip agents, antiblocking agents (e.g. erucamide, oleamide, talc natural silica and synthetic silica, or zeolites) and mixtures thereof.

Typically the total amount of additives (A) in the additive mixture (AM) is not more than 25 wt.-%, more preferably not more than 20 wt.-%, like in the range of 5 to 20 wt.-% based on the total weight of the additive mixture (AM).

A further characteristic of the branched polypropylene (b-PP) is the low amount of misinsertions of propylene within the polymer chain, which indicates that the linear propylene polymer (I-PP), which is used for the production of the branched polypropylene (b-PP), is produced in the presence of a Ziegler-Natta catalyst, preferably in the presence of a Ziegler-Natta catalyst (ZN-C) as defined in more detail below. It is further preferred, that also any polypropylene which is used for an additive mixture, e.g. for an additive masterbatch, is also produced with a Ziegler-Natta catalyst and has therefore also a low amount of misinsertions of propylene.

Accordingly, the linear propylene polymer (I-PP) and/or the branched polypropylene (b-PP) and/or the polypropylene composition is preferably featured by a low amount of 2,1 erythro regio-defects, i.e. of equal or below 0.4 mol.-%, more preferably of equal or below than 0.2 mol.-%, like of not more than 0.1 mol.-%, determined by $^{13}$C-NMR, most preferably 2,1 erythro regio-defects are not detectable at all.

The polypropylene composition and/or the branched polypropylene (b-PP) is further defined by its microstructure.

Preferably the branched polypropylene (b-PP) is isotactic. Accordingly it is preferred that the branched polypropylene (b-PP) has a rather high pentad concentration (mmmm%) determined by $^{13}$C-NMR, i.e. more than 93.0 %, more preferably more than 93.5 %, like more than 93.5 to 97.5 %, still more preferably at least 95.0 %, like in the range of 95.0 to 97.5 %.

A very sensitive and at the same time simple characterization method being commonly used in the scientific literature is large amplitude oscillatory shear (LAOS). In this method a single excitation frequency is applied and the torque response is analysed. The non-linear response generates mechanical higher harmonics at (3,5,7, ...). Fourier Transform analysis allows recovery of intensities and phases. As the intensity of the higher harmonics decreases rapidly, which can lead to very low values of the 5th and higher harmonics, the ratio of the

$$LAOS - NLF(500\%) = \left| \frac{G'_1}{G'_3} \right| \qquad (1)$$

where

$G'_1$ - first order Fourier Coefficient

$G'_3$ - third order Fourier Coefficient

with both coefficients being calculated from a measurement performed at 500% strain, provides the most reliable characterization of the polymer structure.

Preferably, the polypropylene composition and/or the branched polypropylene (b-PP) according to the present invention has a LAOS-NLF(500%), defined as

$$LAOS - NLF(500\%) = \left|\frac{G_1'}{G_3'}\right| \quad (1)$$

where

$G_1'$ - first order Fourier Coefficient

$G_3'$ - third order Fourier Coefficient

with both coefficients being calculated from a measurement performed at 500% strain, of at least $6.0 \pm s$, wherein the standard deviation s, calculated according to the formula (2) below, is $\leq 0.5$.

The standard deviation s for a general quantity X (in the present case, X = LAOS - NLF) is calculated as follows:

$$s = \sqrt{\frac{1}{n-1}\sum_{i=1}^{n}(X_i - \bar{X})^2} \quad (2)$$

where n is the number of measurements being in the range of 5 to 10, $X_i$ is the individual measurement result and $\bar{X}$ is the arithmetic average of the n measurement results defined as

$$\bar{X} = \frac{1}{n}\sum_{i=1}^{n}X_i \quad (3)$$

More preferably, the LAOS-NLF(500%) is at least 6.5, still more preferably at least 6.8, even more preferably at least 7.0, most preferably at least 7.2, like at least 7.4.

The standard deviation s should be no higher than 0.5, preferably $\leq 0.4$, more preferably $\leq 0.3$, still more preferably $\leq 0.2$, most preferably $\leq 0.1$.

High LAOS-NLF values (500% as well as 1000%) are an indication for highly branched polypropylene with high melt strength. Standard deviation can be calculated when the LAOS-NLF value is repeatedly measured on different samples of the same material.

Thus, a small standard deviation when measuring LAOS-NLF values is an indication for a very homogeneous material.

According to a further embodiment, the polypropylene composition and/or the branched polypropylene (b-PP) according to the present invention has a LAOS-NLF(1000%), defined as

$$LAOS - NLF(1000\%) = \left|\frac{G_1'}{G_3'}\right| \quad (1)$$

where

$G_1'$ - first order Fourier Coefficient

$G_3'$ - third order Fourier Coefficient

with both coefficients being calculated from a measurement performed at 1000% strain, of at least $6.0 \pm s$, wherein the standard deviation s, calculated according to formula (2) as explained above, is $\leq 0.5$.

More preferably, the LAOS-NLF(1000%) is at least 6.1, still more preferably at least 6.2, even more preferably at least 6.3, most preferably at least 6.4.

The standard deviation s should be no higher than 0.5, preferably $\leq 0.4$, more preferably $\leq 0.3$, still more preferably $\leq 0.2$, most preferably $\leq 0.1$.

**The linear polypropylene (l-PP)**

As mentioned above, the branched polypropylene (b-PP), i.e. the high melt strength polypropylene (HMS-PP), is a modified polypropylene, which is obtained by reacting the linear polypropylene (l-PP) with a thermally decomposing free radical-forming agent and optionally with bifunctionally unsaturated monomer(s) and/or with multifunctionally unsaturated low molecular weight polymer(s).

One essential aspect of the invention is that a specific unmodified polypropylene must be used in the present invention for the manufacture of the branched polypropylene (b-PP), i.e. of the high melt strength polypropylene (HMS-PP), and thus for the manufacture of the polypropylene composition comprising the branched polypropylene (b-PP), i.e. comprising the high melt strength polypropylene (HMS-PP). A particular finding is that the linear polypropylene (I-PP) must have a rather low molecular weight and thus a rather high melt flow rate. Accordingly the linear polypropylene (I-PP) has a melt flow rate MFR2 (230°C) measured according to ISO 1133 of 0.6 to 3.5 g/10min, preferably of from 0.7 to 3.0 g/10min, more preferably of from 0.7 to 2.5 g/10min, yet more preferably of 0.8 to 2.0 g/10min.

The choice of a rather high starting MFR of the linear polypropylene (I-PP) accomplishes two things: (1) the ratio of the $MFR_2$ of the polypropylene composition and/or of the branched polypropylene (b-PP) to the $MFR_2$ of the linear polypropylene (I-PP) will be small, thereby reducing the risk of gel-formation and (2) the catalyst productivity (in kg (PP) per g (catalyst)) is higher for a higher MFR, thereby increasing the economic viability of the process.

A further essential aspect of the invention is that the specific unmodified polypropylene, i.e. the linear polypropylene (I-PP) must have a specific small ethylene content. Accordingly the linear polypropylene (I-PP) has an ethylene content of .2 to 0.5 wt%.

The branched polypropylene (b-PP), i.e. the high melt strength polypropylene (HMS-PP), differs from the linear polypropylene (I-PP) which is used for its manufacture in that the backbone of the branched polypropylene (b-PP), i.e. of the high melt strength polypropylene (HMS-PP), covers side chains whereas the starting product, i.e. the linear polypropylene (I-PP), does not cover or nearby does not cover side chains. The side chains have significant impact on the rheology of the polypropylene. Accordingly the starting product, i.e. the linear polypropylene (I-PP), and the obtained branched polypropylene (b-PP), i.e. the high melt strength polypropylene (HMS-PP), can be clearly distinguished by their respective flow behaviour under stress.

Accordingly, throughout the instant invention, the term "linear polypropylene" indicates that the linear polypropylene, shows no or nearby no-branching structure. Due to the absence of branches, the linear polypropylene (I-PP) is preferably featured by a low v30 melt extensibility and/or a low F30 melt strength.

Thus it is preferred that the linear polypropylene (I-PP) has

(a) a F30 melt strength of more than 1.0 cN, preferably of more than 2.0 cN, more preferably in the range of 1.0 to 70.0 cN, still more preferably in the range of 1.5 to 65.0 cN, yet more preferably in the range of 2.0 to 60.0 cN, still yet more preferably in the range of 3.0 to 50.0 cN like in the range of 4.0 to 45.0 cN, most preferably in the range of 5.0 to 40.0 cN;
and

(b) a v30 melt extensibility of below 200 mm/s, preferably of below 190 mm/s, more preferably in the range of 100 to below 200 mm/s, still more preferably in the range of 120 to 190 mm/s, yet more preferably in the range of 120 to 175 mm/s, like in the range of 125 to 170 mm/s, most preferably in the range of 130 to 165 mm/s.

Therefore, in one specific embodiment the linear polypropylene (I-PP) has a melt flow rate MFR2 (230 °C / 2.16 kg) in the range of from 0.6 to 3.5 g/10min a F30 melt strength in the range of 2.0 to 60.0 cN and in the range of 120 to 190 mm/s preferably a melt flow rate $MFR_2$ (230 °C / 2.16 kg) in the range of from 0.7 to 3.0 g/10min, a F30 melt strength in the range of 3.0 to 50.0 cN and a a v30 melt extensibility in the range of 120 to 190 mm/s, like a melt flow rate MFR2 (230 °C / 2.16 kg) in the range of more 0.8 to 2.0 g/10min a F30 melt strength in the range of 5.0 to 40.0 cN and a v30 melt extensibility in the range of 120 to 175 mm/s.

Therefore, the invention is directed to a polypropylene composition as herein already described, wherein the branched polypropylene (b-PP) is provided by reacting a linear polypropylene (I-PP) having an ethylene content of 0.2 to 0.5 wt% and a melt flow rate $MFR_2$ (230 °C / 2.16 kg) of 0.6 to 3.5 g/10 min with a thermally decomposing free radical-forming agent, preferably with a peroxide, and optionally with a bifunctionally unsaturated monomer, preferably selected from divinyl compounds, allyl compounds or dienes, and/or optionally with a multifunctionally unsaturated low molecular weight polymer, preferably having a number average molecular weight (Mn) ≤ 10000 g/mol, synthesized from one and/or more unsaturated monomers, obtaining thereby the branched polypropylene (b-PP).

Preferably, the linear polypropylene (I-PP) has a melting point of at least 145°C, more preferably of at least 150°C and still more preferably of at least 158°C.

It is further preferred, that the branched polypropylene (b-PP) has a melting point of at least 145°C, more preferably of at least 150°C and still more preferably of at least 158°C.

**The bifunctionally unsaturated monomer**

The high melt strength polypropylene (HMS-PP) may additionally comprise unsaturated monomers different from ethylene. In other words the high melt strength polypropylene (HMS-PP) may comprise unsaturated units, like bifunctionally unsaturated monomer(s) and/or multifunctionally unsaturated low molecular weight polymer(s) as defined in detail below, being different to propylene or ethylene.

Accordingly in one preferred embodiment the branched polypropylene (b-PP), i.e. the high melt strength polypropylene (HMS-PP), comprises

(i) propylene,
(ii) ethylene and
(iii) bifunctionally unsaturated monomer(s) and/or multifunctionally unsaturated low molecular weight polymer(s).

"Bifunctionally unsaturated" or "multifunctionally unsaturated" as used above means preferably the presence of two or more non-aromatic double bonds, as in e.g. divinylbenzene or cyclopentadiene or polybutadiene. Only such bi- or multifunctionally unsaturated compounds are used which can be polymerized preferably with the aid of free radicals (see below). The unsaturated sites in the bi- or multifunctionally unsaturated compounds are in their chemically bound state not actually "unsaturated", because the double bonds are each used for a covalent bond to the polymer chains of the unmodified polypropylene, i.e. of the linear polypropylene (l-PP).

Reaction of the bifunctionally unsaturated monomer(s) and/or multifunctionally unsaturated low molecular weight polymer(s), preferably having a number average molecular weight (Mn) ≤ 10000 g/mol, synthesized from one and/or more unsaturated monomers with the unmodified polypropylene, i.e. with the linear polypropylene (l-PP), are performed in the presence of a free radical forming agent, e. g. a thermally decomposing free radical-forming agent, like a thermally decomposable peroxide.

The bifunctionally unsaturated monomers may be

- divinyl compounds, such as divinylaniline, m-divinylbenzene, p-divinylbenzene, divinylpentane and divinylpropane;

- allyl compounds, such as allyl acrylate, allyl methacrylate, allyl methyl maleate and allyl vinyl ether;

- dienes, such as 1,3-butadiene, chloroprene, cyclohexadiene, cyclopentadiene, 2,3-dimethylbutadiene, heptadiene, hexadiene, isoprene and 1,4-pentadiene;

- aromatic and/or aliphatic bis (maleimide) bis (citraconimide) and mixtures of these unsaturated monomers.

Especially preferred bifunctionally unsaturated monomers are 1,3-butadiene, isoprene, dimethyl butadiene and divinylbenzene.

**The multifunctionally unsaturated polymer**

The multifunctionally unsaturated low molecular weight polymer, preferably having a number average molecular weight (Mn) ≤ 10000 g/mol may be synthesized from one or more unsaturated monomers.

Examples of such low molecular weight polymers are

- polybutadienes, especially where the different microstructures in the polymer chain, i.e. 1,4-cis, 1,4-trans and 1,2-(vinyl) are predominantly in the 1,2-(vinyl) configuration

- copolymers of butadiene and styrene having 1,2- (vinyl) in the polymer chain.

A preferred low molecular weight polymer is polybutadiene, in particular a polybutadiene having more than 50.0 wt.-% of the butadiene in the 1,2-(vinyl) configuration.

The branched polypropylene, i.e. the high melt strength polypropylene (HMS-PP), may contain more than one bifunctionally unsaturated monomer and/or multifunctionally unsaturated low molecular weight polymer. Even more preferred the amount of bifunctionally unsaturated monomer(s) and multifunctionally unsaturated low molecular weight polymer(s) together in the branched polypropylene, i.e. in the high melt strength polypropylene (HMS-PP), is 0.01 to 10.0 wt.-% based on said branched polypropylene, i.e. based on said high melt strength polypropylene (HMS-PP).

**The thermally decomposing free radical-forming agent**

As stated above it is preferred that the bifunctionally unsaturated monomer(s) and/or multifunctionally unsaturated low molecular weight polymer(s) are used in the presence of a thermally decomposing free radical-forming agent.

Peroxides are preferred thermally decomposing free radical-forming agents. More preferably the thermally decomposing free radical-forming agents are selected from the group consisting of acyl peroxide, alkyl peroxide, hydroperoxide, perester and peroxycarbonate.

The following listed peroxides are in particular preferred:

Acyl peroxides: benzoyl peroxide, 4-chlorobenzoyl peroxide, 3-methoxybenzoyl peroxide and/or methyl benzoyl peroxide.

Alkyl peroxides: allyl t-butyl peroxide, 2,2-bis(t-butylperoxybutane), 1,1-bis(t-butylperoxy)-3,3,5-trimethylcyclohexane, n-butyl-4,4-bis(t-butylperoxy) valerate, diisopropylaminomethyl-t-amyl peroxide, dimethylaminomethyl-t-amyl peroxide, diethylaminomethyl-t-butyl peroxide, dimethylaminomethyl-t-butyl peroxide, 1,1-di-(t-amylperoxy)cyclohexane, t-amyl peroxide, t-butylcumyl peroxide, t-butyl peroxide and/or 1-hydroxybutyl n-butyl peroxide.

Peresters and peroxy carbonates: butyl peracetate, cumyl peracetate, cumyl perpropionate, cyclohexyl peracetate, di-t-butyl peradipate, di-t-butyl perazelate, di-t-butyl perglutarate, di-t-butyl perthalate, di-t-butyl persebacate, 4-nitrocumyl perpropionate, 1-phenylethyl perbenzoate, phenylethyl nitro-perbenzoate, t-butylbicyclo-(2,2,1)heptane percarboxylate, t-butyl-4-carbomethoxy perbutyrate, t-butylcyclobutane percarboxylate, t-butylcyclohexyl peroxycarboxylate, t-butylcyclopentyl percarboxylate, t-butylcyclopropane percarboxylate, t-butyldimethyl percinnamate, t-butyl-2-(2,2-diphenylvinyl) perbenzoate, t-butyl-4-methoxy perbenzoate, t-butylperbenzoate, t-butyl pernaphthoate, t-butyl peroxyisopropylcarbonate, t-butyl pertoluate, t-butyl-1-phenylcyclopropyl percarboxylate, t-butyl-2-propylperpentene-2-oate, t-butyl-1-methylcyclopropyl percarboxylate, t-butyl-4-nitrophenyl peracetate, t-butylnitrophenyl peroxycarbamate, t-butyl-N-succiimido percarboxylate, t-butyl percrotonate, t-butyl permaleic acid, t-butyl permethacrylate, t-butyl peroctoate, t-butyl peroxyisopropylcarbonate, t-butyl perisobutyrate, t-butyl peracrylate and/or t-butyl perpropionate.

Also contemplated are mixtures of these above listed free radical-forming agents.

Additionally it is preferred that the linear polypropylene (I-PP), is used in form of particles of specific size and shape. Accordingly it is preferred that the linear polypropylene (I-PP), has

(a) a particle size distribution $d_{95}$ of below 1500 $\mu$m; more preferably below 1400 $\mu$m, still more preferably in the range of 50 to below 1350 $\mu$m, yet more preferably in the range of 100 to below 1300 $\mu$m, like in the range of 150 to below 1250 $\mu$m;
and/or

(b) a particle size distribution $d_{50}$ of below 1000 $\mu$m; more preferably below 800 $\mu$m, still more preferably in the range of 30 to below 1000 $\mu$m, yet more preferably in the range of 50 to 850 $\mu$m, like in the range of 100 to 750 $\mu$m;
and/or

(c) a $d_{95}/d_{50}$ ratio of below 2.50, more preferably below 2.30, still more preferably below 2.10, yet more preferably in the range of 1.00 to 2.00, still yet more preferably in the range of 1.10 to 1.90.

According to a further embodiment of the polypropylene composition of the invention, the linear polypropylene (I-PP) has

- a porosity of ≤ 10 % and/or
- a specific pore volume of ≤ 0.20 cm$^3$/g.

A still further object of the present invention is a process for producing a polypropylene composition comprising at least 95 wt.-% of a branched polypropylene (b-PP) wherein the polypropylene composition

- has an ethylene content of 0.2 to 0.5 wt%
- has a melt flow rate $MFR_2$ (230 °C / 2.16 kg) measured according to ISO 1133 of 1.0 to 5.0 g/10 min
- has a F30 melt strength of 30 cN to 60 cN and a v30 melt extensibility of 220 to 300 mm/s, wherein the F30 melt strength and the v30 melt extensibility are measured according to ISO 16790:2005 and

wherein the branched polypropylene (b-PP) is provided by reacting a linear polypropylene (I-PP) having an ethylene content of 0.2 to 0.5 wt% and a melt flow rate $MFR_2$ (230 °C / 2.16 kg) of 0.6 to 3.5 g/10 min
with a thermally decomposing free radical-forming agent, preferably with a peroxide, and optionally with a bifunctionally unsaturated monomer, preferably selected from divinyl compounds, allyl compounds or dienes, and/or optionally with a multifunctionally unsaturated low molecular weight polymer, preferably having a number average molecular weight (Mn) ≤ 10000 g/mol, synthesized from one and/or more unsaturated monomers, obtaining thereby the branched polypropylene (b-PP).

According to a special embodiment of the aforementioned process, the ratio of the $MFR_2$ of the polypropylene

composition and/or of the branched polypropylene (b-PP) to the $MFR_2$ of the linear polypropylene (I-PP) is from > 1.25 to 6.

The process for producing the branched polypropylene preferably increases the starting MFR of the linear polypropylene (I-PP) to a rather small extent. This reduces the danger of formation of gels.

This is accomplished by the choice of an already rather high starting MFR of the linear polypropylene. Reference is made in this respect to the section "The linear polypropylene (I-PP)".

Preferably the ratio of the $MFR_2$ of the polypropylene composition and/or of the branched polypropylene (b-PP) to the $MFR_2$ of the linear polypropylene (I-PP) is from 1.3 to 5, more preferable from 1.5 to 4.5, still more preferably from 1.7 to 4.0, like from 2.0 to 3.0.

## The Process for producing the branched polypropylene (b-PP)

One essential aspect of the present invention is the manufacture of the polypropylene composition comprising the branched polypropylene (b-PP), using the linear polypropylene (I-PP). In other words, the present invention relates to a process for providing a polypropylene composition comprising the branched polypropylene (b-PP), wherein the process comprises a step in which a linear polypropylene (I-PP) is reacted with a thermally decomposing free radical-forming agent and optionally with bifunctionally unsaturated monomer(s) and/or with multifunctionally unsaturated low molecular weight polymer(s) obtaining thereby the branched polypropylene (b-PP). Optionally, the instant process comprises, subsequent to the aforementioned step, a further step, in which to the branched polypropylene (b-PP), an additive mixture (AM) in the form of a masterbatch containing additives is added.

Subsequently the so produced polypropylene composition is subjected to a foaming process obtaining thereby a foam comprising the instant polypropylene composition. Concerning the definitions and preferred embodiments of the foam, the polypropylene composition, the branched polypropylene (b-PP), the linear polypropylene (I-PP), the additives (A) and the additive mixture (AM) reference is made to the information provide above.

As mentioned above, in the process for the manufacture of polypropylene composition the branched polypropylene (b-PP), is obtained by treating the linear polypropylene (I-PP), with thermally decomposing radical-forming agents. However in such a case a risk exists that the the linear polypropylene (I-PP), is degraded to a too high extent, which is detrimental. Thus it is preferred that the chemical modification is accomplished by the additional use of bifunctionally unsaturated monomer(s) and/or multifunctionally unsaturated low molecular weight polymer(s) as chemically bound bridging unit(s). A suitable method to obtain the branched polypropylene (b-PP), i.e. the high melt strength polypropylene (HMS-PP), is for instance disclosed in EP 0 787 750, EP 0 879 830 A1 and EP 0 890 612 A2. Thereby, the amount of thermally decomposing radical-forming agents, preferably of peroxide, is preferably in the range of 0.05 to 3.00 wt.-% based on the amount of the linear polypropylene (I-PP). Typically the thermally decomposing radical-forming agents are added together with the bifunctionally unsaturated monomer(s) and/or with multifunctionally unsaturated low molecular weight polymer(s) to the linear polypropylene (I-PP). However it is also possible, but less preferred, that first the bifunctionally unsaturated monomer(s) and/or multifunctionally unsaturated low molecular weight polymer(s) is/are added to the linear polypropylene (I-PP), and subsequent the thermally decomposing radical-forming agents, or the other way round, first the thermally decomposing radical-forming agents are added to the linear polypropylene (I-PP), and subsequent the bifunctionally unsaturated monomer(s) and/or multifunctionally unsaturated low molecular weight polymer(s).

Concerning the bifunctionally unsaturated monomer(s) and/or multifunctionally unsaturated low molecular weight polymer(s) used for the manufacture of the branched polypropylene (b-PP), reference is made to the section "the branched polypropylene".

As stated above it is preferred that the bifunctionally unsaturated monomer(s) and/or multifunctionally unsaturated low molecular weight polymer(s) are used in the presence of a thermally decomposing free radical-forming agent.

Concerning the thermally decomposing free radical-forming agents, reference is made to the section "The thermally decomposing free radical-forming agent".

Preferably the optional step of adding an additive masterbatch is initiated when at least 70 %, preferably at least 80 %, yet more preferably at least 90 %, like at least 95 or 99 %, of the reaction between the linear polypropylene (I-PP) and the thermally decomposing free radical-forming agent and optionally the bifunctionally unsaturated monomer and/or optionally the multifunctionally unsaturated low molecular weight polymer has taken place to obtain the branched polypropylene (b-PP), i.e. the high melt strength polypropylene (HMS-PP).

In a preferred embodiment, an extruder, such as a twin screw extruder, is used for both steps.

The use of an extruder is particularly advantageous in that it can simultaneously be used for the preparation of the branched propylene (b-PP) and subsequent for adding the additive mixture (AM) to said branched propylene (b-PP). In a preferred embodiment, the linear polypropylene (I-PP) is added to an extruder together with - as described in detail above - the thermally decomposing free radical-forming agent, preferably a peroxide, and optionally with the bifunctionally unsaturated monomer(s) and/or with the multifunctionally unsaturated low molecular weight polymer(s), preferably with the bifunctionally unsaturated monomer(s) selected from divinyl compounds, allyl compounds or dienes, to provide the branched polypropylene (b-PP), i.e. the high melt strength polypropylene (HMS-PP), in the first step. It is also possible to use a combination of an extruder downstream a pre-mixing device, wherein the bifunctionally unsaturated monomer(s) and/or the multifunctionally unsaturated low molecular weight polymer(s) and the thermally decomposing free radical-forming agent are added to the polypropylene in the pre-mixing device.

Subsequently, in the optional second step the additive mixture (AM) is preferably added at the downstream end of the extruder screw in order not to interfere with the modification reaction for providing branched polypropylene (b-PP), i.e. the high melt strength polypropylene (HMS-PP), as described above. In this respect, the term "downstream end of the extruder screw" is understood as within the last 60 % of the length of the extruder screw, preferably within the last 65 % of the length of the extruder screw, more preferably at least 70 % of the length of the extruder screw, like at least 75 % of the extruder screw.

Accordingly, the extruder (E) used for the instant process preferably comprises in operation direction a feed-throat (FT), a first mixing zone (MZ1), a second mixing zone (MZ2) and a die (D), wherein between the first mixing zone (MZ1) and the second mixing zone (MZ2) a side feed-throat (SFT) is located. Preferably the extruder is a screw extruder, like a twin screw extruder. Accordingly the linear polypropylene (I-PP), the thermally decomposing free radical-forming agent, preferably a peroxide, and optionally the bifunctionally unsaturated monomer and/or the multifunctionally unsaturated low molecular weight polymer monomer, preferably selected from divinyl compounds, allyl compounds or dienes, but not the additive mixture (AM), are fed via the feed-throat (FT), thereby preferably using a feeder, into the extruder and is/are subsequently passed downstream through the first mixing zone (MZ1). Preferably the shear stress in said first mixing zone (MZ1) is of such extent that the linear polypropylene (I-PP) is molten and the chemical reaction with the radical-forming agent and with the optional bifunctionally unsaturated monomer and/or multifunctionally unsaturated low molecular weight polymer is initiated. After the first mixing zone (MZ1), i.e. between the first mixing zone (MZ1) and the second mixing zone (MZ2), the additive mixture (AM) is added, i.e. fed into the extruder. Preferably the additive mixture (AM) is added via the side feed-throat (SFT), thereby preferably using a side feeder. Subsequently all components of the polypropylene composition, including the additive mixture (AM) are passed downstream through the second mixing zone (MZ2). Finally the polypropylene composition is discharged via the die (D).

Preferably, the first mixing zone (MZ1) is longer than the second mixing zone (MZ2). Preferably the length ratio between the first mixing zone (MZ1) to the second mixing zone (MZ2) [mm (MZ1) / mm (MZ2)] is at least 2/1, more preferably 3/1, yet more preferably in the range of 2/1 to 15/1, still more preferably 3/1 to 10/1.

A linear polypropylene (I-PP) used in the present invention can be produced in a known manner for instance by employing a Ziegler Natta catalyst.

A Ziegler-Natta type catalyst typically used for propylene polymerization is a stereospecific, solid high yield Ziegler-Natta catalyst component comprising as essential components Mg, Ti and Cl. In addition to the solid catalyst, a cocatalyst(s) as well as external donor(s) are typically used in the polymerisation process.

Generally, for Ziegler-Natta type catalysts, components of the catalyst may be supported on a particulate support, such as an inorganic oxide, like silica or alumina, or, often, the magnesium halide may form the solid support.

For the present invention, however, it is preferred that the catalyst components are not supported on an external support, but the catalyst is prepared by an emulsion-solidification method or by a precipitation method.

Accordingly, the present invention is also directed to a process for making a branched polypropylene (b-PP) as defined above, wherein the linear polypropylene (I-PP) is polymerized in the presence of a catalyst which is prepared by an emulsion-solidification method or by a precipitation method.

The solid catalyst usually also comprises an electron donor (internal electron donor) and optionally aluminium. Suitable internal electron donors are, among others, esters of carboxylic acids or dicarboxylic acids, like phthalates, maleates, benzoates, citraconates, and succinates, 1,3-diethers or oxygen or nitrogen containing silicon compounds. In addition mixtures of donors can be used.

The cocatalyst typically comprises an aluminium alkyl compound. The aluminium alkyl compound is preferably trialkyl aluminium such as trimethylaluminium, triethylaluminium, tri-isobutylaluminium or tri-n-octylaluminium. However, it may also be an alkylaluminium halide, such as diethylaluminium chloride, dimethylaluminium chloride and ethylaluminium sesquichloride.

Suitable external electron donors used in polymerisation are well known in the art and include ethers, esters, ketones, amines, alcohols, phenols, phosphines and silanes. Silane type exernal donors are typically organosilane compounds containing Si-OCOR, Si-OR, or Si-NR$_2$ bonds, having silicon as the central atom, and R is an alkyl, alkenyl, aryl, arylalkyl or cycloalkyl with 1-20 carbon atoms are known in the art.

Examples of suitable catalysts and compounds in catalysts are shown in among others, in WO 87/07620, WO 92/21705, WO 93/11165, WO 93/11166, WO 93/19100, WO 97/36939, WO 98/12234, WO 99/33842, WO 03/000756, WO 03/000757, WO 03/000754, WO 03/000755, WO 2004/029112, EP 2610271, WO 2012/007430. WO 92/19659, WO 92/19653, WO 92/19658, US 4382019, US 4435550, US 4465782, US 4473660, US 4560671, US 5539067, US5618771, EP45975, EP45976, EP45977, WO 95/32994, US 4107414, US 4186107, US 4226963, US 4347160, US 4472524, US 4522930, US 4530912, US 4532313, US 4657882, US 4581342, US 4657882.

Detailed Description for preferred ZN catalysts

According to a preferred embodiment of the present invention, a specific type of Ziegler-Natta catalyst is used.

The preferred catalyst used in the present invention is a solid Ziegler-Natta catalyst, which comprises compounds of a transition metal of Group 4 to 6 of IUPAC, like titanium, a Group 2 metal compound, like a magnesium and an internal donor (ID). Further, the solid catalyst is free of any external support material, like silica or $MgCl_2$, but the catalyst is selfsupported.

Accordingly, the present invention is also directed to a process for making a branched polypropylene (b-PP) as defined above, wherein the linear polypropylene (I-PP) is polymerized in the presence of a catalyst as defined above, wherein the catalyst is in particulate form and is obtained by the following general procedure:

a) providing a solution of

$a_1$) at least a Group 2 metal alkoxy compound (Ax) being the reaction product of a Group 2 metal compound and an alcohol (A) comprising in addition to the hydroxyl moiety at least one ether moiety optionally in an organic liquid reaction medium; or

$a_2$) at least a Group 2 metal alkoxy compound (Ax') being the reaction product of a Group 2 metal compound and an alcohol mixture of the alcohol (A) and a monohydric alcohol (B) of formula ROH, optionally in an organic liquid reaction medium; or

$a_3$) a mixture of a Group 2 metal alkoxy compound (Ax) and a Group 2 metal alkoxy compound (Bx) being the reaction product of a Group 2 metal compound and the monohydric alcohol (B), optionally in an organic liquid reaction medium; or

$a_4$) a Group 2 metal alkoxy compound of formula $M(OR_1)_n(OR_2)_mX_{2-n-m}$ or mixture of Group 2 alkoxides $M(OR_1)_{n'}X_{2-n'}$ and $M(OR_2)_{m'}X_{2-m'}$, where M is Group 2 metal, X is halogen, $R_1$ and $R_2$ are different alkyl groups of $C_2$ to $C_{16}$ carbon atoms, and $0 \leq n \leq 2$, $0 \leq m \leq 2$ and $n+m+(2-n-m) = 2$, provided that both n and $m \neq 0$, $0 < n' \leq 2$ and $0 < m' \leq 2$; and

b) adding said solution from step a) to at least one compound of a transition metal of Group 4 to 6 and

c) obtaining the solid catalyst component particles,

and adding an internal electron donor (ID) at any step prior to step c).

The internal donor (ID) or precursor thereof is thus added preferably to the solution of step a) or to the transition metal compound before adding the solution of step a).

According to the procedure above the solid catalyst can be obtained via precipitation method or via emulsion - solidification method depending on the physical conditions, especially temperature used in steps b) and c). Emulsion is also called liquid/liquid twophase system.

In both methods (precipitation or emulsion-solidification) the catalyst chemistry is the same.

In precipitation method combination of the solution of step a) with at least one transition metal compound in step b) is carried out and the whole reaction mixture is kept at least at 50 °C, more preferably in the temperature range of 55 to 110 °C, more preferably in the range of 70 to 100 °C, to secure full precipitation of the catalyst component in form of solid particles (step c).

In emulsion - solidification method in step b) the solution of step a) is typically added to the at least one transition metal compound at a lower temperature, such as from -10 to below 50°C, preferably from -5 to 30°C. During agitation of the emulsion the temperature is typically kept at -10 to below 40°C, preferably from -5 to 30°C. Droplets of the dispersed phase of the emulsion form the active catalyst composition. Solidification (step c) of the droplets is suitably carried out by heating the emulsion to a temperature of 70 to 150°C, preferably to 80 to 110°C.

The catalyst prepared by emulsion - solidification method is preferably used in the present invention.

In a preferred embodiment in step a) the solution of $a_2$) or $a_3$) are used, i.e. a solution of (Ax') or a solution of a mixture of (Ax) and (Bx).

Preferably the Group 2 metal is magnesium.

The magnesium alkoxy compounds (Ax), (Ax') and (Bx) can be prepared *in situ in* the first step of the catalyst preparation process, step a), by reacting the magnesium compound with the alcohol(s) as described above, or said magnesium alkoxy compounds can be separately prepared magnesium alkoxy compounds or they can be even commercially available as ready magnesium alkoxy compounds and used as such in the catalyst preparation process of the invention.

Illustrative examples of alcohols (A) are glycol monoethers. Preferred alcohols (A) are $C_2$ to $C_4$ glycol monoethers, wherein the ether moieties comprise from 2 to 18 carbon atoms, preferably from 4 to 12 carbon atoms. Preferred examples are 2-(2-ethylhexyloxy)ethanol, 2-butyloxy ethanol, 2-hexyloxy ethanol and 1,3-propyleneglycol-monobutyl ether, 3-butoxy-2-propanol, with 2-(2-ethylhexyloxy)ethanol and 1,3-propylene-glycol-monobutyl ether, 3-butoxy-2-propanol being particularly preferred.

Illustrative monohydric alcohols (B) are of formula ROH, with R being a straight-chain or branched $C_2$-$C_{16}$ alkyl residue, preferably $C_4$ to $C_{10}$, more preferably $C_6$ to $C_8$ alkyl residue. The most preferred monohydric alcohol is 2-ethyl-1-hexanol or octanol. Preferably a mixture of Mg alkoxy compounds (Ax) and (Bx) or mixture of alcohols (A) and (B), respectively, are used and employed in a mole ratio of Bx:Ax or B:A from 10:1 to 1:10, more preferably 6:1 to 1:6, still more preferably 5:1 to 1:3, most preferably 5:1 to 3:1.

The Magnesium alkoxy compound may be a reaction product of alcohol(s), as defined above, and a magnesium compound selected from dialkyl magnesiums, alkyl magnesium alkoxides, magnesium dialkoxides, alkoxy magnesium halides and alkyl magnesium halides. Further, magnesium dialkoxides, magnesium diaryloxides, magnesium aryloxyhalides, magnesium aryloxides and magnesium alkyl aryloxides can be used. Alkyl groups can be a similar or different $C_1$-$C_{20}$ alkyl, preferably $C_2$-$C_{10}$ alkyl. Typical alkyl-alkoxy magnesium compounds, when used, are ethyl magnesium butoxide, butyl magnesium pentoxide, octyl magnesium butoxide and octyl magnesium octoxide. Preferably the dialkyl magnesiums are used. Most preferred dialkyl magnesiums are butyl octyl magnesium or butyl ethyl magnesium.

It is also possible that magnesium compound can react in addition to the alcohol (A) and alcohol (B) also with a polyhydric alcohol (C) of formula R"$(OH)_m$ to obtain said magnesium alkoxide compounds. Preferred polyhydric alcohols, if used, are alcohols, wherein R" is a straight-chain, cyclic or branched $C_2$ to $C_{10}$ hydrocarbon residue, and m is an integer of 2 to 6.

The magnesium alkoxy compounds of step a) are thus selected from the group consisting of magnesium dialkoxides, diaryloxy magnesiums, alkyloxy magnesium halides, aryloxy magnesium halides, alkyl magnesium alkoxides, aryl magnesium alkoxides and alkyl magnesium aryloxides. In addition a mixture of magnesium dihalide and a magnesium dialkoxide can be used.

The solvents to be employed for the preparation of the present catalyst may be selected among aromatic and aliphatic straight chain, branched and cyclic hydrocarbons with 5 to 20 carbon atoms, more preferably 5 to 12 carbon atoms, or mixtures thereof. Suitable solvents include benzene, toluene, cumene, xylol, pentane, hexane, heptane, octane and nonane. Hexanes and pentanes are particular preferred.

The reaction for the preparation of the magnesium alkoxy compound may be carried out at a temperature of 40° to 70°C. Most suitable temperature is selected depending on the Mg compound and alcohol(s) used.

The transition metal compound of Group 4 to 6 is preferably a titanium compound, most preferably a titanium halide, like $TiCl_4$.

The internal donor (ID) used in the preparation of the catalyst used in the present invention is preferably selected from (di)esters of phthalic or non-phthalic carboxylic (di)acids, 1,3-diethers, derivatives and mixtures thereof. Especially preferred donors are diesters of aromatic or mono-unsaturated dicarboxylic acids, in particular esters belonging to a group comprising phthalates, malonates, maleates, succinates, citraconates, glutarates, cyclohexene-1,2-dicarboxylates and benzoates, and any derivatives and/or mixtures thereof. Preferred examples are e.g. substituted phthalates, maleates and citraconates, most preferably phthalates and citraconates.

In emulsion method, the two phase liquid-liquid system may be formed by simple stirring and optionally adding (further) solvent(s) and additives, such as the turbulence minimizing agent (TMA) and/or the emulsifying agents and/or emulsion stabilizers, like surfactants, which are used in a manner known in the art for facilitating the formation of and/or stabilize the emulsion. Preferably, surfactants are acrylic or methacrylic polymers. Particular preferred are unbranched $C_{12}$ to $C_{20}$ (meth)acrylates such as poly(hexadecyl)-methacrylate and poly(octadecyl)-methacrylate and mixtures thereof. Turbulence minimizing agent (TMA), if used. is preferably selected from $\alpha$-olefin polymers of $\alpha$-olefin monomers with 6 to 20 carbon atoms, like polyoctene, polynonene, polydecene, polyundecene or polydodecene or mixtures thereof. Most preferable it is polydecene.

The solid particulate product obtained by precipitation or emulsion - solidification method may be washed at least once, preferably at least twice, most preferably at least three times with an aromatic and/or aliphatic hydrocarbons, preferably with toluene, heptane or pentane and/or with $TiCl_4$. Washing solutions can also contain donors and/or compounds of Group 13, like trialkyl aluminium, halogenated alkyl aluminium compounds or alkoxy aluminiun compounds. Aluminium compounds can also be added during the catalyst synthesis.

The catalyst can further be dried, as by evaporation or flushing with nitrogen, or it can be slurried to an oily liquid without any drying step.

The finally obtained Ziegler-Natta catalyst is desirably in the form of particles having generally an average particle size range of 5 to 200 $\mu$m, preferably 10 to 100. Particles are compact with low porosity and have surface area below 20 g/m², more preferably below 10 g/m². Typically the amount of Ti is 1 to 6 wt-%, Mg 10 to 20 wt-% and donor 10 to 40 wt-% of the catalyst composition.

Detailed description of preparation of catalysts are disclosed in WO2010009827, WO 2012/007430, EP2610271, EP 2610270 and EP2610272.

As further component in the instant polymerization process an external donor (ED) is preferably present. Suitable external donors (ED) include certain silanes, ethers, esters, amines, ketones, heterocyclic compounds and blends of these. It is especially preferred to use a silane. It is most preferred to use silanes of the general formula

$$R^a_pR^b_qSi(OR^c)_{(4-p-q)}$$

wherein $R^a$, $R^b$ and $R^c$ denote a hydrocarbon radical, in particular an alkyl or cycloalkyl group, and wherein p and q are numbers ranging from 0 to 3 with their sum p + q being equal to or less than 3. $R^a$, $R^b$ and $R^c$ can be chosen independently from one another and can be the same or different. Specific examples of such silanes are (tert-butyl)$_2$Si(OCH$_3$)$_2$, (cyclohexyl)(methyl)Si(OCH$_3$)$^2$, (phenyl)$_2$Si(OCH$_3$)$_2$ and (cyclopentyl)$_2$Si(OCH$_3$)$_2$, or

silanes of general formula

$$Si(OCH_2CH_3)_3(NR^3R^4)$$

wherein $R^3$ and $R^4$ can be the same or different a represent a linear, branched or cyclic hydrocarbon group having 1 to 12 carbon atoms.

It is in particular preferred that $R^3$ and $R^4$ are independently selected from the group consisting of methyl, ethyl, n-propyl, n-butyl, octyl, decanyl, iso-propyl, iso-butyl, isopentyl, tert.-butyl, tert.-amyl, neopentyl, cyclopentyl, cyclohexyl, methylcyclopentyl and cycloheptyl. Most preferably ethyl.

In addition to the Ziegler-Natta catalyst and the optional external donor (ED) a cocatalyst can be used. The co-catalyst is preferably a compound of group 13 of the periodic table (IUPAC), e.g. organo aluminum, such as an aluminum compound, like aluminum alkyl, aluminum halide or aluminum alkyl halide compound. Accordingly in one specific embodiment the co-catalyst (Co) is a trialkylaluminium, like triethylaluminium (TEAL), dialkyl aluminium chloride or alkyl aluminium dichloride or mixtures thereof. In one specific embodiment the co-catalyst (Co) is triethylaluminium (TEAL).

Preferably the ratio between the co-catalyst (Co) and the external donor (ED) [Co/ED] and/or the ratio between the co-catalyst (Co) and the transition metal (TM) [Co/TM] should be carefully chosen for each process.

Further the invention is related to an extruded foam comprising the polypropylene composition according to the invention.

The process for producing an extruded foam is in the skilled knowledge. In such a process, a melt of the instant polypropylene composition comprising a gaseous foaming agent such as butane, HFC or CO$_2$ is suddenly expanded through a pressure drop in a continuous foaming process. In a continuous foaming process, the polypropylene composition is melted and laden with gas in an extruder under pressures typically above 20 bar before it is extruded through a die where the pressure drop causes the formation of a foam. The mechanism of foaming polypropylene in foam extrusion is explained, for example, in H. E. Naguib, C. B. Park, N. Reichelt, Fundamental foaming mechanisms governing the volume expansion of extruded polypropylene foams, Journal of Applied Polymer Science, 91, 2661-2668 (2004). Processes for foaming are outlined in S. T. Lee, Foam Extrusion, Technomic Publishing (2000

## EXAMPLES

The following definitions of terms and determination methods apply for the above general description of the invention as well as to the below examples unless otherwise defined.

## 1. Measuring Methods

### Comonomer Content

Quantitative nuclear-magnetic resonance (NMR) spectroscopy was used to quantify the comonomer content and comonomer sequence distribution of the polymers. Quantitative $^{13}$C{$^1$H} NMR spectra were recorded in the solution-state using a Bruker Advance III 400 NMR spectrometer operating at 400.15 and 100.62 MHz for $^1$H and $^{13}$C respectively. All spectra were recorded using a $^{13}$C optimised 10 mm extended temperature probehead at 125 °C using nitrogen gas for all pneumatics. Approximately 200 mg of material was dissolved in 3 ml of 1,2-tetrachloroethane-$d_2$ (TCE-$d_2$) along with chromium-(III)-acetylacetonate (Cr(acac)$_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and was quantitatively needed for accurate ethylene content quantification. Standard single-pulse excitation was employed without Nuclear Overhauser Effect (NOE), using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra.

Quantitative $^{13}$C{$^1$H} NMR spectra were processed, integrated and relevant quantitative properties determined from the integrals using computer programs. All chemical shifts were indirectly referenced to the central methylene group of the ethylene block (EEE) at 30.00 ppm using the chemical shift of the solvent. This approach allowed comparable referencing, even when this structural unit was not present. Characteristic signals corresponding to the incorporation of ethylene were observed as described in Cheng, H. N., Macromolecules 17 (1984), 1950). With characteristic signals corresponding to 2,1 erythro regio defects observed (as described in L. Resconi, L. Cavallo, A. Fait, F. Piemontesi, Chem. Rev. 2000, 100 (4), 1253, in Cheng, H. N., Macromolecules 1984, 17, 1950, and in W-J. Wang and S. Zhu, Macromolecules 2000, 33, 1157) the correction for the influence of the regio defects on determined properties was required. Characteristic signals corresponding to other types of regio defects were not observed.

The comonomer fraction was quantified using the method of Wang et. al. (Wang, W-J., Zhu, S., Macromolecules 33 (2000), 1157) through integration of multiple signals across the whole spectral region in the $^{13}$C{$^1$H} spectra. This method was chosen for its robust nature and ability to account for the presence of regio-defects when needed. Integral regions were slightly adjusted to increase applicability across the whole range of encountered comonomer contents. For systems where only isolated ethylene in PPEPP sequences was observed the method of Wang et. al. was modified to reduce the influence of non-zero integrals of sites that are known to be present. This approach reduced the overestimation of ethylene content for such systems and was achieved by reduction of the number of sites used to determine the absolute ethylene content to:

$$E = 0.5(S_{\beta\beta} + S_{\beta\gamma} + S_{\beta\delta} + 0.5(S_{\alpha\beta} + S_{\alpha\gamma}))$$

Through the use of this set of sites the corresponding integral equation becomes:

$$E = 0.5(I_H + I_G + 0.5(I_C + I_D))$$

using the same notation as used in the article of Wang et. al. (Wang, W-J., Zhu, S., Macromolecules 33 (2000), 1157). Equations used for absolute propylene content were not modified. The mole percent comonomer incorporation was calculated from the mole fraction:

$$E \text{ [mol\%]} = 100 * fE$$

The weight percent comonomer incorporation was calculated from the mole fraction:

$$E \text{ [wt\%]} = 100 * (fE * 28.06) / ((fE * 28.06) + ((1-fE) * 42.08))$$

**Quantification of microstructure by NMR** spectroscopy

Quantitative nuclear-magnetic resonance (NMR) spectroscopy was used to quantify the isotacticity and regio-regularity of the propylene homopolymers.

Quantitative $^{13}$C{$^1$H} NMR spectra were recorded in the solution-state using a Bruker Advance III 400 NMR spectrometer operating at 400.15 and 100.62 MHz for $^1$H and $^{13}$C respectively. All spectra were recorded using a $^{13}$C optimised 10 mm extended temperature probehead at 125°C using nitrogen gas for all pneumatics.

For propylene homopolymers approximately 200 mg of material was dissolved in 1,2-tetrachloroethane-$d_2$ (TCE-$d_2$). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225;

Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative $^{13}C\{^1H\}$ NMR spectra were processed, integrated and relevant quantitative properties determined from the integrals using proprietary computer programs.

For propylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253;; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest(Busico, V., Cipullo, R., Prog. Polym. Sci. 26 (2001) 443; Busico, V., Cipullo, R., Monaco, G., Vacatello, M., Segre, A.L., Macromolecules 30 (1997) 6251).

Specifically the influence of regio-defects and comonomer on the quantification of the tacticity distribution was corrected for by subtraction of representative regio-defect and comonomer integrals from the specific integral regions of the stereo sequences.

The isotacticity was determined at the pentad level and reported as the percentage of isotactic pentad (mmmm) sequences with respect to all pentad sequences:

$$[mmmm]\ \% = 100 * (mmmm\ /\ sum\ of\ all\ pentads)$$

The presence of 2,1 erythro regio-defects was indicated by the presence of the two methyl sites at 17.7 and 17.2 ppm and confirmed by other characteristic sites. Characteristic signals corresponding to other types of regio-defects were not observed (Resconi, L., Cavallo, L., Fait, A., Piemontesi, F., Chem. Rev. 2000, 100, 1253).

The amount of 2,1 erythro regio-defects was quantified using the average integral of the two characteristic methyl sites at 17.7 and 17.2 ppm:

$$P_{21e} = (I_{e6} + I_{e8})\ /\ 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio-defects:

$$P_{total} = P_{12} + P_{21e}$$

The mole percent of 2,1 erythro regio-defects was quantified with respect to all propene:

$$[21e]\ mol.\text{-}\% = 100 * (P_{21e}\ /\ P_{total})$$

$MFR_2$ (230 °C / 2.16 kg) is measured according to ISO 1133 (230 °C, 2.16 kg load)

**F30** and F200 melt strength and v30 and v200 melt extensibility

The test described herein follows ISO 16790:2005. An apparatus according to Fig. 1 of ISO 16790:2005 is used.

The strain hardening behaviour is determined by the method as described in the article "Rheotens-Mastercurves and Drawability of Polymer Melts", M. H. Wagner, Polymer Engineering and Sience, Vol. 36, pages 925 to 935. The strain hardening behaviour of polymers is analysed by Rheotens apparatus (product of Göttfert, Siemensstr.2, 74711 Buchen, Germany) in which a melt strand is elongated by drawing down with a defined acceleration.

The Rheotens experiment simulates industrial spinning and extrusion processes. In principle a melt is pressed or extruded through a round die and the resulting strand is hauled off. The stress on the extrudate is recorded, as a function of melt properties and measuring parameters (especially the ratio between output and haul-off speed, practically a measure for the extension rate). For the results presented below, the materials were extruded with a lab extruder HAAKE Polylab system and a gear pump with cylindrical die (UD = 6.0/2.0 mm). For measuring F30 melt strength and v30 melt extensibility, the pressure at the extruder exit (= gear pump entry) is set to 30 bars by by-passing a part of the extruded polymer. For measuring F200 melt strength and v200 melt extensibility, the pressure at the extruder exit (= gear pump entry) is set to 200 bars by by-passing a part of the extruded polymer.

The gear pump was pre-adjusted to a strand extrusion rate of 5 mm/s, and the melt temperature was set to 200°C. The spinline length between die and Rheotens wheels was 80 mm. At the beginning of the experiment, the take-up speed of the Rheotens wheels was adjusted to the velocity of the extruded polymer strand (tensile force zero): Then the experiment was started by slowly increasing the take-up speed of the Rheotens wheels until the polymer filament breaks. The acceleration of the wheels was small enough so that the tensile force was measured under quasi-steady conditions. The acceleration of the melt strand drawn down is 120 mm/sec2. The Rheotens was operated in combination with the PC program EXTENS. This is a real-time dataacquisition program, which displays and stores the measured data of tensile force and drawdown speed. The end points of the Rheotens curve (force versus pulley rotary speed), where the polymer strand ruptures, are taken as the F30 melt strength and v30 melt extensibilty values, or the F200 melt strength and v200 melt extensibilty values, respectively.

The xylene soluble fraction at room temperature (XS, wt.-%): The amount of the polymer soluble in xylene is determined at 25 °C according to ISO 16152; first edition; 2005-07-01.

**DSC analysis, melting temperature ($T_m$) and heat of fusion ($H_f$), crystallization temperature ($T_c$) and heat of crystallization ($H_c$):** measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225°C. Crystallization temperature and heat of crystallization ($H_c$) are determined from the cooling step, while melting temperature and heat of fusion ($H_f$) are determined from the second heating step p.

### Particle size/Particle size distribution

A sieve analysis according to ISO 3310 was performed on the polymer samples. The sieve analysis involved a nested column of sieves with wire mesh screen with the following sizes: >20 $\mu$m, >32 $\mu$m, >63 $\mu$m, >100 $\mu$m, >125 $\mu$m, >160 $\mu$m, > 200 $\mu$m, >250 $\mu$m, > 315 $\mu$m, > 400 $\mu$m, >500 $\mu$m, >710 $\mu$m, >1 mm, >1.4 mm, > 2 mm, >2.8 mm. The samples were poured into the top sieve which has the largest screen openings. Each lower sieve in the column has smaller openings than the one above (see sizes indicated above). At the base is the receiver. The column was placed in a mechanical shaker. The shaker shook the column. After the shaking was completed the material on each sieve was weighed. The weight of the sample of each sieve was then divided by the total weight to give a percentage retained on each sieve. The particle size distribution and the characteristic median particle size d50 as well as the top-cut particle size d95 were determined from the results of the sieve analysis according to ISO 9276-2.

### Porosity and specific pore volume

The porosity and the specific pore volume of the polymer are measured by mercury porosimetry according to DIN 66133 in combination with helium density measurement according to DIN 66137-2. The samples were first dried for 3 hours at 70 °C in a heating cabinet, then stored in an desiccator until the measurement. The pure density of the samples was determined on milled powder with helium at 25 °C in a Quantachrome Ultrapyknometer 1000-T (DIN 66137-2). Mercury porosimetry was performed on non-milled powder in a Quantachrome Poremaster 60-GT in line with DIN 66133.

The porosity is calculated by equation (II) like

$$Porosity\;[\%] = [specific\;pore\;volume/(specific\;pore\;volume + \frac{1}{density})] * 100 \quad \text{(II)}$$

### 2. Examples

### Polymerization of linear polypropylenes (I-PP)

All inventive and comparative examples (except I-PP 3) were produced in a Borstar® pilot plant with a prepolymerization reactor, one slurry loop reactor and one gas phase reactor. For the polymerization process of linear polypropylenes I-PP 1a and I-PP 1b the catalyst of the example section of WO 2010009827 A1 (see pages 30 and 31) comprising bis(2-ethylhexyl)phthalate as internal donor along with triethyl-aluminium (TEAL) as co-catalyst and dicyclo pentyl dimethoxy silane (D-donor) as external donor was used. The aluminium to donor ratio, the aluminium to titanium ratio and the polymerization conditions are indicated in Table 1.

**Table 1** - Polymerization and polymer properties

|  |  | I-PP 1a | I-PP1b | I-PP 2a | I-PP 2b | I-PP 3 |
|---|---|---|---|---|---|---|
| *Polymerization* |  |  |  |  |  |  |
| Co/ED ratio | mol/mol | 6.5 | 6.5 | 7.5 | 7.5 |  |
| Co/TC ratio | mol/mol | 110.0 | 110.0 | 120.3 | 120.3 |  |
| *Loop (Reactor 1)* |  |  |  |  |  |  |
| Time | h | 0.40 | 0.40 | 0.30 | 0.30 |  |
| Temperature | °C | 75 | 75 | 75 | 75 |  |
| $MFR_2$ | g/10min | 0.30 | 1.0 | 0.48 | 1.0 |  |
| XCS | wt.-% | 3.9 | 3.9 | 2.3 | 2.3 |  |
| C2 content | wt.-% | 0.2 | 0.2 | 0 | 0 |  |
| $H_2$/C3 ratio | mol/kmol | 0.20 | 0.50 | 0.31 | 0.60 |  |
| C2/C3 ratio | mol/kmol | 0.5 | 0.5 | 0 | 0 |  |
| amount | wt.-% | 43 | 43 | 45 | 45 |  |
| *GPR (Reactor 2)* |  |  |  |  |  |  |
| Time | h | 1.45 | 1.45 | 1.25 | 1.25 |  |
| Temperature | °C | 80 | 80 | 85 | 85 |  |
| Pressure | kPa | 2200 | 2200 | 2300 | 2300 |  |
| $MFR_2$ | g/10min | 0.30 | 1.0 | 0.51 | 1.3 |  |
| C2 content | wt.-% | 0.3 | 0.3 | 0 | 0 |  |
| $H_2$/C3 ratio | mol/kmol | 0.60 | 1.25 | 0.42 | 0.95 |  |
| C2/C3 ratio | mol/kmol | 3.2 | 3.2 | 0 | 0 |  |
| amount | wt.-% | 57 | 57 | 55 | 55 |  |
| Catalyst productivity | kg(PP)/g(cat) | 7 | 11 | 29 | 50 |  |
|  |  |  |  |  |  |  |
| *Powder properties* |  |  |  |  |  |  |
| porosity | % | 7.5 | 7.5 | 15 | 15 | 7.7 |
| specific pore volume | $cm^3$/g | 0.09 | 0.09 | 0.24 | 0.24 | 0.10 |
| median particle size $d_{50}$ | $\mu$m | 650 | 650 | 1120 | 1120 | 420 |
| top-cut particle size $d_{95}$ | $\mu$m | 1220 | 1220 | 1730 | 1730 | 1130 |
| Ratio $d_{95}$/$d_{50}$ |  | 1.88 | 1.88 | 1.54 | 1.54 | 2.69 |
| Average Particle Size | mm | 0.88 | 1.03 | 2.02 | 2.44 | 0.25 |
|  |  |  |  |  |  |  |
| *Polymer properties* |  |  |  |  |  |  |
| Ethylene content | wt% | 0.3 | 0.3 | 0 | 0 | 0 |
| I(E) content | % | n.d. | n.d. | n.d. | n.d. | n.d. |
| XCS | wt% | 4.5 | 4.5 | 2.4 | 2.4 | 2.2 |

(continued)

| Polymer properties | | | | | | |
|---|---|---|---|---|---|---|
| MFR$_2$ | g/10min | 0.3 | 1.0 | 0.3 | 1.3 | 0.6 |
| T$_m$(DSC) | °C | 158 | 158 | 165 | 165 | 163 |

For the polymerisation of linear polypropylenes I-PP 2a and I-PP 2b a transesterified high yield MgCl$_2$-supported Ziegler-Natta polypropylene catalyst component comprising diethyl phthalate as internal donor was used. Triethyl-aluminium (TEAL) was used as co-catalyst and dicyclo pentyl dimethoxy silane (D-donor) was used as external donor. The catalyst component and its preparation concept are described in general for example in patent publications EP491566, EP591224 and EP586390.

Accordingly, the catalyst component is prepared as follows: First, 0.1 mol of MgCl$_2$ × 3 EtOH was suspended under inert conditions in 250 ml of decane in a reactor at atmospheric pressure. The solution was cooled to -15°C and the 300 ml of cold TiCl$_4$ was added while maintaining the temperature at said temperature. Then, the temperature of the slurry was increased slowly to 20 °C. At this temperature, 0.02 mol of dioctylphthalate (DOP) was added to the slurry. After the addition of the phthalate, the temperature was raised to 135 °C during 90 minutes and the slurry was allowed to stand for 60 minutes. Then, another 300 ml of TiCl$_4$ was added and the temperature was kept at 135 °C for 120 minutes. After this, the catalyst was filtered from the liquid and washed six times with 300 ml heptane at 80 °C. Then, the solid catalyst component was filtered and dried.

For the polymerisation of linear polypropylene I-PP 3 the commercially available catalyst Lynx900, available from BASF, was used. Lynx900 is a second generation Ziegler-Natta catalyst and was used in combination with methyl methacrylate as external donor and diethyl aluminium chloride as co-catalyst. For polymerization, a Hercules-type slurry plant with 4 stirred tank reactors in series was applied, operating in n-heptane slurry at 70°C.

## Additive mixture

A linear propylene homopolymer having an MFR2 (230 °C / 2.16 kg) of 2.8 g/10 min. a melting Temperature of 165 °C, a F30 melt strength of 4.5 cN and v30 melt extensibility of 75 mm/s was compounded with 10.0 wt% Irganox B225 FF and 2.5 wt% of Hydrotalcit in order to provide an additive masterbatch (AM) for incorporating into a base polymer of branched polypropylene.

## Inventive Example IE1 and Comparative Examples CE1 to CE4

The linear polypropylenes described in Table 1 were subjected to a reactive extrusion in the presence of butadiene and peroxide as described in the following. Both the butadiene and the peroxide (amounts are indicated in table 3) were pre-mixed with the I-PP powder prior to the melt-mixing step in a horizontal mixer with paddle stirrer at a temperature of 65°C, maintaining an average residence time of 15 to 20 minutes. The pre-mixture was transferred under inert atmosphere to a co-rotating twin screw extruder of the type Theyson TSK60 having a barrel diameter of 60 mm and an UDratio of 48 equipped with a high intensity mixing screw having 3 kneading zones and a two-step degassing setup. The melt temperature profile is given in table 2. The screw speed and throughput is indicated in table 3. In the first 3/4 of the extruder length the branched polypropylene is produced (b-PP). Subsequently, via a side feeder, i.e. at the last 1/4 of the extruder length, an additive mixture (AM) as defined above is fed into the extruder to the produced branched polypropylene (b-PP). The extruded polypropylene composition was discharged and pelletized. The final properties are indicated in table 4.

**Table 2** Set temperature profile in the extruder

| Zone | | 1 to 6 | 7 | 8 and 9 | 10 and 11 | 12 | 13 | 14 |
|---|---|---|---|---|---|---|---|---|
| Temperature | [°C] | 240 | 230 | 220 | 230 | 240 | 230 | 220 |

**Table 3:** Process conditions

| | | CE 1 | IE 1 | CE 2 | CE 3 | CE 4 |
|---|---|---|---|---|---|---|
| PP powder | | I-PP 1a | I-PP 1b | I-PP 2a | I-PP 2b | I-PP 3 |
| Peroxide* | [wt%] | 0.675 | 0.675 | 0.675 | 0.675 | 0.675 |

(continued)

|  |  | CE 1 | IE 1 | CE 2 | CE 3 | CE 4 |
|---|---|---|---|---|---|---|
| butadiene* | [wt%] | 1.20 | 2.10 | 1.45 | 1.44 | 2.30 |
| screw speed | [rpm] | 350 | 350 | 400 | 350 | 450 |
| throughput | [kg/h] | 225 | 225 | 225 | 225 | 225 |
| additive mixture* | [wt%] | 2 | 2 | 2 | 2 | 2 |
| * based on the total amount of the polypropylene composition | | | | | | |

## Table 4

| Example | PP powder | Start-MFR 230°C/2.16kg | End-MFR 230°C/2.16kg | F30 | v30 | F200 | v200 | LAOS-NLF at 1000% | LAOS-NLF at 500% |
|---|---|---|---|---|---|---|---|---|---|
|  |  | g/10 min | g/10 min | cN | mm/s | cN | mm/s | — | — |
| CE1 | I-PP 1a | 0.3 | 2.0 | 31.4 | 245 | 8.2 | 245 | 6.1 ± 0.5 | 6.2 ± 0.4 |
| IE1 | I-PP 1b | 1.0 | 2.0 | 40.9 | 231 | 25.7 | 245 | 6.5 ± 0.1 | 7.6 ± 0.1 |
| CE2 | I-PP 2a | 0.2 | 1.8 | 32.6 | 247 | 10.0 | 249 | 6.4 ± 0.8 | 6.7 ± 0.8 |
| CE3 | I-PP 2b | 1.3 | 2.0 | 30.8 | 254 | 10.0 | 256 | 6.9 ± 0.6 | 6.8 ± 1.0 |
| CE4 | I-PP 3 | 0.6 | 2.0 | 39.7 | 239 | 12.7 | 248 | 6.4 ± 0.3 | 7.5 ± 0.5 |

## Claims

1. Polypropylene composition comprising at least 95 wt.-% of a branched polypropylene (b-PP) wherein the polypropylene composition

   - has an ethylene content of 0.2 to 0.5 wt%
   - has a melt flow rate $MFR_2$ (230 °C / 2.16 kg) measured according to ISO 1133 of 1.0 to 5.0 g/10 min
   - has a F30 melt strength of 30 cN to 60 cN and a v30 melt extensibility of 220 to 300 mm/s,
   - has a F200 melt strength of 10 cN to 40 cN and a v200 melt extensibility of 220 to 300 mm/s wherein the F30 and F200 melt strength and the v30 and v200 melt extensibility are measured according to ISO 16790:2005 and wherein the branched polypropylene (b-PP) is obtainable by reacting a linear polypropylene (I-PP) having an ethylene content of 0.2 to 0.5 wt% and a melt flow rate MFR$_2$ (230°C/2.16 kg) of 0.6 to 3.5 g/10 min

with a thermally decomposing free radical-forming agent, preferably with a peroxide, and optionally with a bifunctionally unsaturated monomer, preferably selected from divinyl compounds, allyl compounds or dienes, and/or optionally with a multifunctionally unsaturated low molecular weight polymer, preferably having a number average molecular weight (Mn)≤1000 g/mol, synthesized from one and/or more unsaturated monomers, obtaining thereby the branched polypropylene (b-PP), and the linear polypropylene (1-PP) is obtainable by polymerizing in the presence of a solid Ziegler-Natta catalyst which is prepared by an emulsion-solidification method or by a precipitation method.

2. Polypropylene composition according to any one of the preceding claims, wherein the polypropylene composition has 2,1 erythro regio-defects of ≤ 0.4 mol.-% determined by $^{13}$C-NMR spectroscopy.

3. The polypropylene composition according to any one of the preceding claims, wherein the polypropylene composition has a LAOS-NLF(500%), defined as

$$LAOS - NLF(500\%) = \left| \frac{G_1'}{G_3'} \right|$$

where

$G_1'$ - first order Fourier Coefficient

$G_3'$ - third order Fourier Coefficient

with both coefficients being calculated from a measurement performed at 500% strain, of at least $6.0 \pm$ s, wherein the standard deviation s is ≤ 0.5.

4. The polypropylene composition according to any one of the preceding claims, wherein the polypropylene composition has a LAOS-NLF(1000%), defined as

$$LAOS - NLF(1000\%) = \left| \frac{G_1'}{G_3'} \right|$$

where

$G_1'$ - first order Fourier Coefficient

$G_3'$ - third order Fourier Coefficient

with both coefficients being calculated from a measurement performed at 1000% strain, of at least $6.0 \pm$ s, wherein the standard deviation s, is ≤ 0.5.

5. Polypropylene composition according to any one of the preceding claims wherein the linear polypropylene (1-PP) is employed in the form of particles having

- a particle size distribution $d_{95}$ of below 1500 $\mu$m and/or
- a particle size distribution $d_{50}$ of below 1000 $\mu$m and/or
- a $d_{95}/d_{50}$ ratio of below 2.50.

6. Polypropylene composition according to any one of the preceding claims, wherein the linear polypropylene (1-PP) is employed in the form of particles having

- a porosity of ≤ 10 % and/or
- a specific pore volume of ≤ 0.20 cm$^3$/g.

7. Process for producing a polypropylene composition comprising at least 95 wt% by a branched polypropylene (b-PP) wherein the polypropylene composition

- has an ethylene content of 0.2 to 0.5 wt%
- has a melt flow rate MFR$_2$ (230 °C / 2.16 kg) measured according to ISO 1133 of 1.0 to 5.0 g/10 min
- has a F30 melt strength of 30 cN to 60 cN and a v30 melt extensibility of 220 to 300 mm/s, wherein the F30 melt strength and the v30 melt extensibility are measured according to ISO 16790:2005 and

wherein the branched polypropylene (b-PP) is provided by reacting a linear polypropylene (1-PP) having an ethylene content of 0.2 to 0.5 wt% and a melt flow rate MFR$_2$ (230 °C / 2.16 kg) of 0.6 to 3.5 g/10 min with a thermally decomposing free radical-forming agent, preferably with a peroxide, and optionally with a bifunctionally unsaturated monomer, preferably selected from divinyl compounds, allyl compounds or dienes, and/or optionally with a multifunctionally unsaturated low molecular weight polymer, preferably having a number average molecular weight (Mn) ≤ 10000 g/mol, synthesized from one and/or more unsaturated monomers, obtaining thereby the branched polypropylene (b-PP), and wherein the linear polypropylene (1-PP) is polymerised in the presence of a solid Ziegler-Natta catalyst which is prepared by an emulsion-solidification method or by a precipitation method.

8. Process according to claim 7, wherein the ratio of the MFR$_2$ of the polypropylene composition and/or of the branched polypropylene (b-PP) to the MFR$_2$ of the linear polypropylene (1-PP) is from > 1.25 to 6.

9. Process according to claim 7 or 8, wherein the catalyst is in particulate form and is obtained by

a) providing a solution of

a1) at least a Group 2 metal alkoxy compound (Ax) being the reaction product of a Group 2 metal compound and an alcohol (A) comprising in addition to the hydroxyl moiety at least one ether moiety optionally in an organic liquid reaction medium; or
a2) at least a Group 2 metal alkoxy compound (Ax') being the reaction product of a Group 2 metal compound and an alcohol mixture of the alcohol (A) and a monohydric alcohol (B) of formula ROH, optionally in an organic liquid reaction medium; or
a3) a mixture of a Group 2 metal alkoxy compound (Ax) and a Group 2 metal alkoxy compound (Bx) being the reaction product of a Group 2 metal compound and the monohydric alcohol (B), optionally in an organic liquid reaction medium; or
a4) a Group 2 metal alkoxy compound of formula M(ORI)n(OR2)mX2-n-m or mixture of Group 2 alkoxides M(OR1)n'X2-n' and M(OR2)m'X2-m', where M is Group 2 metal, X is halogen, R1 and R2 are different alkyl groups of C2 to C16 carbon atoms, and 0 ≤ n ≤ 2, 0 ≤ m ≤ 2 and n+m+(2-n-m) = 2, provided that both n and m ≠ 0, 0 < n' ≤ 2 and 0 < m' ≤ 2; and

b) adding said solution from step a) to at least one compound of a transition metal of Group 4 to 6 and
c) obtaining the solid catalyst component particles,

and adding an internal electron donor (ID) at any step prior to step c).

10. Extruded foam comprising the polypropylene composition according to any one of claims 1 to 6.

**Patentansprüche**

1. Polypropylenzusammensetzung, umfassend mindestens 95 Gew.-% eines verzweigten Polypropylens (b-PP), wobei die Polypropylenzusammensetzung

- einen Ethylengehalt von 0,2 bis 0,5 Gew.-% aufweist
- eine Schmelzflussrate MFR$_2$ (230 °C / 2,16 kg) gemessen nach ISO 1133 von 1,0 bis 5,0 g/10 min hat
- eine F30-Schmelzfestigkeit von 30 cN bis 60 cN und eine v30-Schmelzdehnbarkeit von 220 bis 300 mm/s hat,
- eine F200-Schmelzfestigkeit von 10 cN bis 40 cN und eine v200-Schmelzdehnbarkeit von 220 bis 300 mm/s aufweist, wobei die F30- und F200-Schmelzfestigkeit und die v30- und v200-Schmelzdehnbarkeit gemäß ISO 16790:2005 gemessen werden und wobei das verzweigte Polypropylen (b-PP) erhältlich ist durch Umsetzen eines linearen Polypropylens (1-PP) mit einem Ethylengehalt von 0,2 bis 0,5 Gew.-% und einer Schmelzflussrate

MFR$_2$ (230°C/2,16 kg) von 0,6 bis 3,5 g/10 min mit einem thermisch zersetzenden radikalbildenden Mittel, vorzugsweise mit einem Peroxid, und gegebenenfalls mit einem bifunktionell ungesättigten Monomer, vorzugsweise ausgewählt aus Divinylverbindungen, Allylverbindungen oder Dienen, und/oder gegebenenfalls mit einem multifunktionell ungesättigten niedermolekularen Polymer, vorzugsweise mit einem zahlenmittleren Molekulargewicht (Mn) ≤1000 g/mol, synthetisiert aus einem und/oder mehreren ungesättigten Monomeren, wodurch das verzweigte Polypropylen (b-PP) erhalten wird, und das lineare Polypropylen (1-PP) durch Polymerisation in Gegenwart eines festen Ziegler-Natta-Katalysators, der durch ein Emulsionsverfestigungsverfahren oder durch ein Fällungsverfahren hergestellt wird, erhältlich ist.

2. Polypropylenzusammensetzung gemäß einem der vorhergehenden Ansprüche, wobei die Polypropylenzusammensetzung 2,1-Erythro-Regio-Defekte von ≤ 0,4 Mol-% aufweist, bestimmt durch $^{13}$ C-NMR-Spektroskopie.

3. Polypropylenzusammensetzung gemäß einem der vorhergehenden Ansprüche, wobei die Polypropylenzusammensetzung einen LAOS-NLF(500%) aufweist, definiert als

$$LAOS - NLF(500\%) = \left| \frac{G'_1}{G'_3} \right|$$

wobei

$G'_1$ - Fourier-Koeffizient erster Ordnung
$G'_3$ - Fourier-Koeffizient dritter Ordnung

wobei beide Koeffizienten aus einer bei 500% Dehnung durchgeführten Messung von mindestens 6,0 ± s berechnet werden, wobei die Standardabweichung s ≤ 0,5 ist.

4. Polypropylenzusammensetzung gemäß einem der vorhergehenden Ansprüche, wobei die Polypropylenzusammensetzung einen LAOS-NLF(1000%) aufweist, definiert als

$$LAOS - NLF(1000\%) = \left| \frac{G'_1}{G'_3} \right|$$

wobei

$G'_1$ - Fourier-Koeffizient erster Ordnung
$G'_3$ - Fourier-Koeffizient dritter Ordnung

wobei beide Koeffizienten aus einer bei 1000% Dehnung durchgeführten Messung von mindestens 6,0 ± s berechnet werden, wobei die Standardabweichung s ≤ 0,5 ist.

5. Polypropylenzusammensetzung gemäß einem der vorhergehenden Ansprüche, wobei das lineare Polypropylen (1-PP) in Form von Teilchen verwendet wird, die

- eine Partikelgrößenverteilung d$_{95}$ von unter 1500 μm und/oder
- eine Partikelgrößenverteilung d$_{50}$ von unter 1000 μm und/oder
- ein Verhältnis d$_{95}$/d$_{50}$ von unter 2,50 aufweisen.

6. Polypropylenzusammensetzung gemäß einem der vorhergehenden Ansprüche, wobei das lineare Polypropylen (1-PP) in Form von Teilchen verwendet wird, die

- eine Porosität von ≤ 10 % und/oder
- ein spezifisches Porenvolumen von ≤ 0,20 cm$^3$/g aufweisen.

7. Verfahren zur Herstellung einer Polypropylenzusammensetzung, die mindestens 95 Gew.-% eines verzweigten Polypropylens (b-PP) enthält, wobei die Polypropylenzusammensetzung

- einen Ethylengehalt von 0,2 bis 0,5 Gew.-% aufweist
- eine Schmelzflussrate $MFR_2$ (230 °C / 2,16 kg) gemessen nach ISO 1133 von 1,0 bis 5,0 g/10 min hat
- eine F30-Schmelzfestigkeit von 30 cN bis 60 cN und eine v30-Schmelzdehnbarkeit von 220 bis 300 mm/s aufweist, wobei die F30-Schmelzfestigkeit und die v30-Schmelzdehnbarkeit gemäß ISO 16790:2005 gemessen werden und

wobei das verzweigte Polypropylen (b-PP) bereitgestellt wird durch Umsetzen eines linearen Polypropylens (1-PP) mit einem Ethylengehalt von 0,2 bis 0,5 Gew.-% und einer Schmelzflussrate $MFR_2$ (230 °C / 2,16 kg) von 0,6 bis 3,5 g/10 min mit einem thermisch zersetzenden radikalbildenden Mittel, vorzugsweise mit einem Peroxid, und gegebenenfalls mit einem bifunktionell ungesättigten Monomer, vorzugsweise ausgewählt aus Divinylverbindungen, Allylverbindungen oder Dienen, und/oder gegebenenfalls mit einem multifunktionell ungesättigten niedermolekularen Polymer, vorzugsweise mit einem zahlenmittleren Molekulargewicht (Mn) $\leq$ 10000 g/mol, synthetisiert aus einem und/oder mehreren ungesättigten Monomeren, wodurch das verzweigte Polypropylen (b-PP) erhalten wird, und wobei das lineare Polypropylen (1-PP) in Gegenwart eines festen Ziegler-Natta-Katalysators polymerisiert wird, der durch ein Emulsionsverfestigungsverfahren oder durch ein Fällungsverfahren hergestellt wird.

8. Verfahren gemäß Anspruch 7, wobei das Verhältnis des $MFR_2$ der Polypropylenzusammensetzung und/oder des verzweigten Polypropylens (b-PP) zum $MFR_2$ des linearen Polypropylens (1-PP) von > 1,25 bis 6 beträgt.

9. Verfahren gemäß Anspruch 7 oder 8, wobei der Katalysator in Partikelform vorliegt und erhalten wird durch

a) Bereitstellung einer Lösung von

a1) mindestens einer Gruppe-2-Metall-Alkoxyverbindung (Ax), die das Reaktionsprodukt einer Gruppe-2-Metallverbindung und eines Alkohols (A) ist, der zusätzlich zur Hydroxylgruppe mindestens eine Ethergruppe enthält, gegebenenfalls in einem organischen flüssigen Reaktionsmedium; oder

a2) mindestens einer Gruppe-2-Metallalkoxyverbindung (Ax'), die das Reaktionsprodukt einer Gruppe-2-Metallverbindung und einer Alkoholmischung des Alkohols (A) und eines einwertigen Alkohols (B) der Formel ROH ist, gegebenenfalls in einem organischen flüssigen Reaktionsmedium; oder

a3) ein Gemisch aus einer Gruppe-2-Metallalkoxyverbindung (Ax) und einer Gruppe-2-Metallalkoxyverbindung (Bx), die das Reaktionsprodukt einer Gruppe-2-Metallverbindung und des einwertigen Alkohols (B) ist, gegebenenfalls in einem organischen flüssigen Reaktionsmedium; oder

a4) einer Gruppe-2-Metall-Alkoxyverbindung der Formel M(OR1)n(OR2)mX2-n-m oder ein Gemisch von Gruppe-2-Alkoxiden M(OR1)n'X2-n' und M(OR2)m'X2-m', worin M ein Gruppe-2-Metall ist, X ein Halogen ist, R1 und R2 verschiedene Alkylgruppen mit C2- bis C16-Kohlenstoffatomen sind und $0 \leq n \leq 2$, $0 \leq m \leq 2$ und n+m+(2-n-m) = 2, vorausgesetzt, dass sowohl n als auch m $\neq$ 0, $0 < n' \leq 2$ und $0 < m' \leq 2$; und

b) Zugabe der Lösung aus Schritt a) zu mindestens einer Verbindung eines Übergangsmetalls der Gruppe 4 bis 6 und

c) Gewinnung der festen Katalysatorteilchen,

und Zugabe eines internen Elektronendonors (ID) in einem beliebigen Schritt vor Schritt c).

10. Extrudierter Schaumstoff, der die Polypropylenzusammensetzung nach einem der Ansprüche 1 bis 6 enthält.

**Revendications**

1. Composition de polypropylène comprenant au moins 95 % en poids d'un polypropylène ramifié (b-PP), dans laquelle la composition de polypropylène

- a une teneur en éthylène de 0,2 à 0,5 % en poids
- a un indice de fluage $MFR_2$ (230°C / 2,16 kg), mesuré conformément à la norme ISO 1133, de 1,0 à 5,0 g/10 min
- a une résistance à l'état fondu F30 de 30 cN à 60 cN et une extensibilité à l'état fondu v30 de 220 à 300 mm/s,
- a une résistance à l'état fondu F200 de 10 cN à 40 cN et une extensibilité à l'état fondu v200 de 220 à 300 mm/s, dans laquelle les résistances à l'état fondu F30 et F200 et les extensibilités à l'état fondu v30 et v200 sont mesurées conformément à la norme ISO 16790:2005, et dans laquelle le polypropylène ramifié (b-PP) peut être obtenu par réaction d'un polypropylène linéaire (1-PP) ayant une teneur en éthylène de 0,2 à 0,5 % en poids et un indice de fluage MFR$_2$ (230°C / 2,16 kg) de 0,6 à 3,5 g/10 min avec un agent formant des radicaux libres se décomposant thermiquement, de préférence avec un peroxyde, et optionnellement avec un monomère à insaturation bifonctionnelle, de préférence choisi parmi les composés divinyliques, les composés allyliques et les diènes, et/ou optionnellement avec un polymère de faible masse moléculaire à insaturation polyfonctionnelle, de préférence ayant une masse moléculaire moyenne en nombre (Mn) < 1000 g/mol, synthétisé à partir d'un et/ou plusieurs monomères insaturés, ce qui donne ainsi le polypropylène ramifié (b-PP), et le polypropylène linéaire (1-PP) peut être obtenu par polymérisation en présence d'un catalyseur de Ziegler-Natta solide qui est préparé par un procédé de solidification en émulsion ou par un procédé de précipitation.

2. Composition de polypropylène selon la revendication précédente, dans laquelle la composition de polypropylène a une proportion de régio-défauts érythro 2,1 < 0,4 % en moles, déterminée par spectroscopie RMN-$^{13}$C.

3. Composition de polypropylène selon l'une quelconque des revendications précédentes, dans laquelle la composition de polypropylène a une valeur de LAOS-NLF (500 %), déterminée par

$$LAOS - NLF(500\%) = \left| \frac{G'_1}{G'_3} \right|$$

où

$G_1$' - coefficient de la série de Fourier de premier ordre
$G_3$' - coefficient de la série de Fourier de troisième ordre
les deux coefficients étant calculés à partir d'une mesure effectuée à une déformation de 500 %, d'au moins 6,0 $\pm$ s, dans laquelle l'écart type s est < 0,5.

4. Composition de polypropylène selon l'une quelconque des revendications précédentes, dans laquelle la composition de polypropylène a une valeur de LAOS-NLF (1000 %), déterminée par

$$LAOS - NLF(1000\%) = \left| \frac{G'_1}{G'_3} \right|$$

où

$G_1$' coefficient de la série de Fourier de premier ordre
$G_3$' - coefficient de la série de Fourier de troisième ordre
les deux coefficients étant calculés à partir d'une mesure effectuée à une déformation de 1000 %, d'au moins 6,0 $\pm$ s, dans laquelle l'écart type s est < 0,5.

5. Composition de polypropylène selon l'une quelconque des revendications précédentes, dans laquelle le polypropylène linéaire (1-PP) est employé sous la forme de particules ayant

- une distribution des tailles de particules $d_{95}$ inférieure à 1500 $\mu$m et/ou
- une distribution des tailles de particules $d_{50}$ inférieure à 1000 $\mu$m et/ou
- un rapport $d_{95}/d_{50}$ inférieur à 2,50.

6. Composition de polypropylène selon l'une quelconque des revendications précédentes, dans laquelle le polypropylène linéaire (1-PP) est employé sous la forme de particules ayant

- une porosité $\leq$ 10 % et/ou
- un volume de pores spécifique $\leq$ 0,20 cm$^3$/g.

7. Procédé pour produire une composition de polypropylène comprenant au moins 95 % en poids d'un polypropylène ramifié (b-PP), dans lequel la composition de polypropylène

- a une teneur en éthylène de 0,2 à 0,5 % en poids

- a un indice de fluage MFR$_2$ (230°C / 2,16 kg), mesuré conformément à la norme ISO 1133, de 1,0 à 5,0 g/10 min

- a une résistance à l'état fondu F30 de 30 cN à 60 cN et une extensibilité à l'état fondu v30 de 220 à 300 mm/s, parmi lesquelles la résistance à l'état fondu F30 et l'extensibilité à l'état fondu v30 sont mesurées conformément à la norme ISO 16790:2005 et

dans lequel le polypropylène ramifié (b-PP) est obtenu par réaction d'un polypropylène linéaire (1-PP) ayant une teneur en éthylène de 0,2 à 0,5 % en poids et un indice de fluage MFR$_2$ (230°C / 2,16 kg) de 0,6 à 3,5 g/10 min

avec un agent formant des radicaux libres se décomposant thermiquement, de préférence avec un peroxyde, et optionnellement avec un monomère à insaturation bifonctionnelle, de préférence choisi parmi les composés divinyliques, les composés allyliques et les diènes, et/ou optionnellement avec un polymère de faible masse moléculaire à insaturation polyfonctionnelle, de préférence ayant une masse moléculaire moyenne en nombre (Mn) $\leq$ 10000 g/mol, synthétisé à partir d'un et/ou plusieurs monomères insaturés, ce qui donne ainsi le polypropylène ramifié (b-PP), et dans lequel le polypropylène linéaire (1-PP) est polymérisé en présence d'un catalyseur de Ziegler-Natta solide qui est préparé par un procédé de solidification en émulsion ou par un procédé de précipitation.

8. Procédé selon la revendication 7, dans lequel le rapport du MFR$_2$ de la composition de polypropylène et/ou du polypropylène ramifié (b-PP) sur le MFR$_2$ du polypropylène linéaire (1-PP) est de > 1,25 à 6.

9. Procédé selon la revendication 7 ou 8, dans lequel le catalyseur est sous forme particulaire et est obtenu par

a) obtention d'une solution de

a1) au moins un composé alcoxy d'un métal du Groupe 2 (Ax) qui est le produit de la réaction d'un composé d'un métal du Groupe 2 et d'un alcool (A) comprenant, en plus du fragment hydroxyle, au moins un fragment éther optionnellement dans un milieu réactionnel liquide organique ; ou

a2) au moins un composé alcoxy d'un métal du Groupe 2 (Ax') qui est le produit de la réaction d'un composé d'un métal du Groupe 2 et d'un mélange d'alcools de l'alcool (A) et d'un alcool monovalent (B) de formule ROH, optionnellement dans un milieu réactionnel liquide organique ; ou

a3) un mélange d'un composé alcoxy d'un métal du Groupe 2 (Ax) et d'un composé alcoxy d'un métal du Groupe 2 (Bx) qui est le produit de la réaction d'un composé d'un métal du Groupe 2 et de l'alcool monovalent (B), optionnellement dans un milieu réactionnel liquide organique ; ou

a4) un composé alcoxy d'un métal du Groupe 2 de formule M(OR1)n(OR2)mX2-n-m ou un mélange d'alkylates du Groupe 2 M(OR1)n'X2-n' et M(OR2)m'X2-m', où M est un métal du Groupe 2, X est un halogène, R1 et R2 sont des groupes alkyle différents ayant 2 à 16 atomes de carbone, et $0 \leq n \leq 2$, $0 \leq m \leq 2$ et n+m+(2-n-m) = 2, sous réserve que tant n que m 0, $0 < n' \leq 2$ et $0 < m' \leq 2$ ; et

b) addition de ladite solution de l'étape a) à au moins un composé d'un métal de transition des Groupes 4 à 6 et

c) obtention des particules de composant catalyseur solide,

et addition d'un donneur d'électrons interne (ID) à n'importe quelle étape avant l'étape c).

10. Mousse extrudée comprenant la composition de polypropylène selon l'une quelconque des revendications 1 à 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014016205 A1
- EP 2520425 A1
- JP H1077357 B
- EP 1892264 A
- EP 0879830 A1
- EP 0787750 A
- EP 0890612 A2
- WO 8707620 A
- WO 9221705 A
- WO 9311165 A
- WO 9311166 A
- WO 9319100 A
- WO 9736939 A
- WO 9812234 A
- WO 9933842 A
- WO 03000756 A
- WO 03000757 A
- WO 03000754 A
- WO 03000755 A
- WO 2004029112 A
- EP 2610271 A
- WO 2012007430 A
- WO 9219659 A
- WO 9219653 A
- WO 9219658 A
- US 4382019 A
- US 4435550 A
- US 4465782 A
- US 4473660 A
- US 4560671 A
- US 5539067 A
- US 5618771 A
- EP 45975 A
- EP 45976 A
- EP 45977 A
- WO 9532994 A
- US 4107414 A
- US 4186107 A
- US 4226963 A
- US 4347160 A
- US 4472524 A
- US 4522930 A
- US 4530912 A
- US 4532313 A
- US 4657882 A
- US 4581342 A
- WO 2010009827 A
- EP 2610270 A
- EP 2610272 A
- WO 2010009827 A1
- EP 491566 A
- EP 591224 A
- EP 586390 A

**Non-patent literature cited in the description**

- **H. E. NAGUIB ; C. B. PARK ; N. REICHELT.** Fundamental foaming mechanisms governing the volume expansion of extruded polypropylene foams. *Journal of Applied Polymer Science,* 2004, vol. 91, 2661-2668
- **S. T. LEE.** Foam Extrusion. Technomic Publishing, 2000
- **SINGH, G. ; KOTHARI, A. ; GUPTA, V.** *Polymer Testing,* 2009, vol. 28 (5), 475
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **CHENG, H. N.** *Macromolecules,* 1984, vol. 17, 1950
- **L. RESCONI ; L. CAVALLO ; A. FAIT ; F. PIEMONTESI.** *Chem. Rev.,* 2000, vol. 100 (4), 1253
- **W-J. WANG ; S. ZHU.** *Macromolecules,* 2000, vol. 33, 1157
- **WANG, W-J. ; ZHU, S.** *Macromolecules,* 2000, vol. 33, 1157
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromolecules,* 1997, vol. 30, 6251
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 11289

- **RESCONI, L. ; CAVALLO, L. ; FAIT, A. ; PIEMON-TESI, F.** *Chem. Rev.,* 2000, vol. 100, 1253

- **M. H. WAGNER.** Rheotens-Mastercurves and Drawability of Polymer Melts. *Polymer Engineering and Sience,* vol. 36, 925-935